# EUROPEAN PATENT APPLICATION

(11) **EP 2 252 092 A2**
(43) Date of publication of application: **17.11.2010**
(21) Application number: 10174025.6
(22) Date of filing: 25.08.2005
(51) Int. Cl.: H04W 4/18

(54) **Three-dimensional symbols from a database are used to generate a matrix of three or more simultaneously propagated superimposed electromagnetic waves.**

(30) Priority: 24.08.2005 US 211209; 26.08.2004 US 605273 P
(62) Divisional of application: 05792482.1
(71) Applicant: Symstream Technology Holdings Pty Ltd, Oakleigh, Victoria 3166 (AU)
(72) Inventor: La Due, Christopher Karl, Brighton, Victoria (AU)
(74) Representative: Ribeiro, James Michael

(57) **Abstract**

Means, methods and apparatus that enables the accurate recording, and retransmission of audio visual information from a three dimensional source, using holophascc 3D wave modeling protocols, processes and procedures.

## Description

This application claims the benefit of provisional Application No. 60/605,273, entitled Wave Matrix Mechanics Method and Apparatus, filed August 26, 2004.

### BACKGROUND OF THE INVENTION

### 1. Field of the invention

The present invention relates to three dimensional 3D continuous discrete state (CDS) logic that is the qualitative mechanical function of Wave Matrix Mechanics that provides practical and stable Qualitative Mechanical Logic (QML) protocol, processes and procedures that enable completely novel self adaptive qualitative communications, qualitative computation, and efficient quantitative utilization that enables a plurality of technological apparatus, instrumentality, dynamic formative communication topologies and applications.

### 2. Description of Related Art

Chaos Theory, A branch of science pioneered by MIT meteorologist Edward Lorenz in the 1960's, searches for order in natural and synthetic processes that seem to appear random. Chaotic systems are common in nature for reasons that most researchers do not fully understand. Conventional understanding sees chaotic systems as predictable in the short term and unpredictable in the long term for one fundamental reason. The central focus of those involved in the development of ideas in Science and solutions in Technology views the world from a rather narrow viewpoint. Today conventional instrumentality and apparatus is designed to quantify phenomenon from a one-dimensional point of view, i.e., one perspective, one direction or frame of reference at a time. Another component of Chaos Theory is Complexity Theory; the study of systems on the edge of Chaos that are orderly while being extremely flexible and adaptive. Other related work such as General Systems Theory developed originally after World War II in parallel with Cybernetic modalities has influenced many ideas about heuristic self-adaptive systems from a pure theoretical point of view yet nothing truly practical has been gleaned from these salient theories.

Many others who are focused on the understanding of recursive protocols that relate complex self-adaptive systems have integrated Claude Shannon's salient work in Information Theory into the underpinings of all system that are essentially pyramidal in structure. This developmental path has been necessary, yet it has ultimately led to a dead end simply because Information Theory is founded upon viewing and utilizing the modulated magnetic moment from only one point of view at a time. This narrow perspective is a sort of quasi quantum mechanical myopic perspective.

The first hologram was conceived by and produced by Dr. Dennis Gabor, a researcher at the imperial college in London long before the invention of the laser. In 1948 he published a paper entitled, "Images Formation by Reconstructed Wavefronts." He was the first to realise the capabilities of the phenomenon of interference of light, yet no one has been able to create holograms that can be propagated through selected channel space un corrupted or impeded in any way until what the invention provides within the body content of this disclosure. Hidden in the interference is quantifiable and qualifiable 3D spatial structure. Gabor did not see this aspect.

Voice communications since the time of Alexander Graham Bell and others who invented and developed the telephone simply reformed the analogue pulses of the telegraph and applied various differentiations of pulse shapes that were propagated over electrical wires to began from the conversions of sound waves that stimulated a diaphragm that emitted electrical pulses that equated to one dimensional wave forms that approximated the oscillations of sound waves produced by the emitting diaphragm. The receiving electromagnetic diaphragm was placed on the other side of the electrical conductors was excited by the received electrical pulses. The receiving diaphragm responded by moving air from a vibrating surface attached to a moving magnet that traveled within a bracketed oscillation state bound and reproduced an approximation of the sound information produced by the human voice that represented the information sent from the original emission point. All the subsequent developments from the nexus points of the telegraph and the telephone have been but further synthesis of these original ideas. Technical developments that followed such as cohors, cathodes, vacuum tubes-valves, transistors, integrated circuits, microprocessors, and all other developments that are components of the silicon revolution are nothing more than extensions of the original one dimensional communication structures applied by CM., Morse, Bell and others. Even the invention of halftone, which was first used in providing images via manipulated contrast in print-media in the 19^{th} Century, is but a variation of the binary coded concept. Moreover, the concept that underlies the halftone process, the translation of a continuous range of values into a discrete binary system, was to become one of the most significant and widely effective intellectual devices of the twentieth century; television, photography, telemetry, and most important computer technology; all reside on this basic binary concept that goes back over centuries. The digital revolution is nothing more than an extension of these basic concepts.

The fundamental process of message multiplexing began with the development of more complex telegraphic routing topologies of the early 20^{th} Century. Today's Third Generation (3G) cellular technology and the data packet messaging is nothing more than a reformatted an extension of telegraphic topology message multiplexing. Packet switching is nothing more than more rapid propagation of the basic disassembler/reassembler idea. The basic idea behind storing and retrieving digital data information after everything is said and done is nothing more than the reformatting of the basic Abacus form and use protocols that was invented in ancient times such as the Salamis tablet invented around 300 B.C. Today our data registers are still patterned after these early inventions. So what has really changed? Not much, it is just faster and more accessible because of mass production and mass distribution.

Today technology is careening towards increasingly more complex levels of implementation and operation. Technologists are reaching a dead end with binary logic as a main means of conveying information. Now is the time to introduce a new symbology and the means and methods of emitting, propagating and exciting this new symbology. The invention provides a breakthrough towards providing simple solutions that enable incredibly flexible new technology systems. In this disclosure the invention is applied towards communication network topologies and the apparatus that are incorporated into communication network topologies. However, the inventions means and methods can be applied to a vast range technological applications from medical technology, manufacturing, computer design, transportation, material analysis, perturbation prediction in hydraulic systems, three dimensional video and sound reproduction and the like.

### SUMMARY OF THE INVENTION

The invention applies a radically different means and method of technological formation and function by introducing the concept of *Holophasec 3D Magnetic Moment.* The invention redefines how we create carrier signals that are based upon the utilization of all three-spatial dimensions that occupy the space and time that exists between any selected transceiver-emitter/exciter array sets that are constituent technological elements that exist within the channel topology of any communications network. The Holophasec 3D Modulated Magnetic Moment quantises into variable electromagnetic fields that are comprised a potentially massive simultaneously nested population of periodic wave structures that completely populate the electromagnetic topology of a communications channel from emission point to excitation point which is defined as electromagnetic space and time. The invention provides a Holophasec 3D Radian Space model that defines a cogent framework for the near infinite symbolic state bounds that can be derived from the Holophasec 3D Modulated Magnetic Moment. The invention provides a tri-cycling continuous base band 3D analogue carrier signal, which is a carrier sinusoid that transports the information signal over the airwaves in the case of radio transmission or though wires, bus logic channels of microchip transistor topology, or optical fibres in the case of telephony or computer communication.

The 3D carrier base band signal is an analogue Wave Matrix that occupies a complete 3D electromagnetic field that completely populates 3D radian vector space and time. The invention creates the transmission path whose parameters are manipulated in order to convey the Discrete State (CDS) 3D geometric-harmonic logic in the three spatial dimensions. This approach produces a revolution in propagating base band data. In this particular case the invention creates a 3D base band data that is unique for it is three-dimensional spatial data. The invention creates a system by which the carrier is modulated by the base band signal and transmits on the frequency band of the carrier frequency in all three spatial dimensions simultaneously.

The term *Holophasec* denotes and connotes an infinitely malleable and adaptable 3D geometric symbology that codifies an n-dimensional 3D symbolic state that is derived, coded and viewed stereoscopically in all three spatial dimensions as referenced to the three-dimensional Wave Matrix base band carrier signal. Each Wave Matrix is a electromagnetic piece of a dynamically malleable Hologram in that is not static for it constantly oscillates, moves and comprises a harmonic totally that is greater that is constituent elements. A Holophasec 3D Modulated Magnetic Moment for example may be considered as a piece of three dimensional information that is part of a more massive hologram that is not limited in just visual terms. The core concept of Holophasec 3D extends the reality of a hologram beyond the world of static cinematically defined visual images. Holophasec symbology includes but is not limited to the reproduction and containment of Holophasec 3D periodic fields that comprise and create visual-holograms, auditory-holograms, olfactory-holograms, taste-sense-holograms, and tactile kinetic information, and the like. The Holophasec 3D Modulated Magnetic Moment can also be viewed as an oscillating periodic 3D field of electromagnetic, sound and materially kinetic reality that possesses no limitations of physical, mathematical and or symbolic orientation. In that its harmonic whole is the discrete symbolic container that conveys information continuously when linked logically from unique physical positions and symbolic states to another unique physical position and state without corruption, or reduction of resolution with respect to the quantisation of information. Conventional Nyquist quantisation that is nothing but an approximation of the original information recorded, assembled, periodically disassembled and propagated and re assembled for playback in its original form to the user so selected.

The term Holophasec is also a new word that is introduced in this disclosure for the purposes of accurately describing the continuous analogue oscillation of simultaneously propagated Wave Matrix aggregations that are also discrete state 3D logical field increments that are made possible by providing: (1) 3D Tricycling base band modulation means and methods (2) the dynamic n-dimensional geometric 3D logical coordinates embodied n-dimensional geometric symbolic constructs (GSC) as Symbolic Containers (SC) that are pieces of moving Holophasec 3D holograms. A number of distinctly different types of holograms have been produced. Some such as acoustical or sound holograms do not use light. Geometric Symbolic Construct (GSC) produce n-dimensional discrete state logic in that each fractal, vector, polygon line produce a novel geometric language that defines each symbolic element as a discrete symbolic element that lends to quantitatively counting each symbolic element as a protocol 3D digital modulation option that produces n-dimensional 3D symbolic states for wide range of data communication applications based upon multiple mathematical dimensional state formation methods.

In one application the invention provides the means and method of recording optical and sound holograms, disassembling the 3D spatial information that is contained within defined electromagnetic-Holophasec 3D Magnetic Moment fields. This information is propagated through selected conventional channel space and original base band carrier channel space that is structured upon the inventions means and methods. The process involves reassembling the 3D spatial information for playback, or for viewing in real time streaming at a remote location other than where the original information is recorded. The invention advances the original concept of the hologram. The invention transforms the process of creating a static image or sound increment or other sensorial element and causes the hologram to move in a 3D cinematic process across electromagnetic time and space. Unlike a one dimensional piece of film or images and sound waves that are sampled and quantised and reduced to binary logic the invention provides the means and method of creating Holophasec 3D Modulated Magnetic Moments (H3DMM) that captures increments and the moving intervals of the natural oscillation of all observable phenomenon.

These *Holophasec-grams* are not static visual or sound images states but are progressive and dynamically oscillating, simultaneous generated, and propagated periodic and non-periodic wave-form structures that comprise aggregate assemblages of n-dimensional symbolic structures that are configured as the inventions Geometric Symbolic Construct (GSC). These geometric constructs coupled with the inventions 3D base band modulation method introduce the protocols of Wave Matrix Mechanics and the core underpinning that is Qualitative Mechanical Logic (QML). The *Holophasec 3D gram* is fundamentally derived by combining linear phase and lateral phase trajectories that create 3D spatial reference of the geometric coordinates which are generated using all three dimensions as a spherical symbolic reference that is not a sampled approximation but an accurate reproduction of the optical, sound and or other original information that can be propagated in three spatial dimensions as a symbolic reference from a spatial three dimensional emitter/exciter target reference. The invention utilises modified pulsed laser technology that enables the propagation of Wave Matrix Holophasec 3D Modulated Magnetic Moments across any channel medium regardless of original configuration.

The invention is the first to use wave interference and superimposed entanglement as a means of redefining how we code channel logic. One of the key implementations of the inventions means and methods is Holophasec 3D Tricycling Radio (H3DTR) base band carrier channel which is the inventions high frequency, low power, high symbol density three dimensional base band carrier. The Holophasec 3D Radio Channel provides the full utilization of the three spatial dimensions that codify a 3D base band analogue carrier channel that modulates in simultaneous tricycles of analogue base band wave pulses that are simultaneously propagated across electromagnetic time and space. The inventions provides the first three dimensional 3D analogue channel, which is the first 3D carrier base band channel in history of communications technology development.

A Holophasec 3D emitter sets the 3D spatial template for the inventions 3D base band carrier channel and the Holophasec 3D discrete state logic. The inventions emitter is also a 3D exciter, for a Wave Matrix can be emitted and simultaneously excite the originating emitter without causing electromagnetic interference that tends to plague typical one dimensional channels based upon Claude Shannon's Information Theory. This is accomplished simply by looking at what is propagated as a multiwave matrix from as many superimposed multipoints of view that can be simultaneously synthesised within the time and space frame of reference as defined by the modulated communications channel. The fundamental geometric topology of each Holophasec 3D emitter/exciter array is based upon a parabolic shape that is half the radian geometric constellation that is one of the key topological shapes that the invention uses.

A Wave Matrix can be defined as an object with an XYZ spatial stereoscopic 3D dimension as viewed and defined from any angle or point view expressed in this disclosure as Phase-Space-Place (PSP) or, alternatively, as Phase-Space-Position (PSP). Alter Fractals are self-similar yet unique and may be deterministic or stochastic. These features are essential to creating three-dimensional discrete state symbolic constructs that are derived from the point-transfer-point (pTp) Holophasec 3D mapping that is provided by the means and methods of the invention. Each Geometric Symbolic Construct (GSC) produces one or a plurality of fractal shapes. Wave Matrix aggregations are mechanically linked by continuous expressions of vectors that possess discrete state symbolic value that are best described for purposes here as linked three dimensional fractal coordinates. Geometric Symbolic Constructs are independent as discrete state Symbolic Containers (SC) yet continuously linked as fractal geometric shapes within one Wave Matrix aggregation. Also the protocol links a plurality of Wave Matrix aggregations that create complete logical coordinates, that are generated by a communications device to travel seamlessly in channel space. Vector lines that create vector spaces with a minimum of three sides are the discrete state logical structural elements of GSC vector planes that are also contribute to Holographic fractal shapes. A fractal can also be described as rough or fragmented geometric shape that can define how we view all massive information in the material world.

A Wave Matrix is holophasec because it creates a geometric three-dimensional matrix derived from three or more full wave; representing full oscillation cycles, half wave; representing half oscillation cycles, and or wavelet; representing a plurality of variable oscillation cycles. The mathematical and geometrically defined mechanical protocols, processes and procedures that involve the creation, generation and propagation of a wave matrix which is the foundation of Wave Matrix Mechanics. Moreover, the infinite combinations of mathematically derived geometric constellations and symbolic states that introduces a new expression of logic which is qualitative in addition to being solely quantitative in nature such as is the case in Quantum Mechanics. Wave Matrix Mechanics provides the ability to eliminate noise in any communications channel by simply dynamically changing the stereoscopic 3D point of view of the observer or detector/exciter "on-the-fly" in order to capture the alternative noiseless point of view, point of observation or Phase-Space-Place of the same Wave Matrix.

In same cases H3DMM enables simultaneous bi-directional communications between multiple users on multiple ends of multiple conversations within the same channel space at any point in time in that channel space. The invention provides n-dimensional symbolic states in terms of the n-dimensional constellation and angles of view that can detect individual 3D symbolic fractal, vector structured messages from one wave matrix that possesses n-dimensional symbolic value defined by the n-dimensional polygon and or vector, and or fractal n-dimensional states that simultaneous create and are defined by the inventions Geometric Symbolic Constructs (GSC), that are Symbolic Containers (SC) created from three dimensional transforms generated in the H3D Holomapping algorithmic procedural process which in essence is a combination of geometric mathematics that encompass polygon line and space calculations and vector line and spatial relationships of each magnetic moment that creates and defines any channel space. Qualitative Mechanical Logical (QML) is manifested in the protocol, processes and procedures of Wave Matrix Mechanics which n-directional wave and particle trajectory that defines the harmonic whole of an electromagnetic moment, in that the stereoscopic 3D focal distance, focal depth, focal planes, and apertures of Wave Matrix Sampling that are defined as geometric phase-space-place (PSP). PSP samples are defined as stereoscopic 3D spatial parameters within the geometric symbolic construct (GSC) structures that create the n-dimensional geometric structures of the inventions Holophasec Magnetic Moment. Qualitative Mechanics Logic (QML) and the protocol, processes and procedures completely depart from Claude Shannon's Information Theory and the limits of the 'Shannon Channel.'

Qualitative Mechanics Logic (QML) and its progeny Wave Matrix Mechanics provide the first completely stable and practical low cost solution that enables a new form of qualitative mechanical logical state description provided by the unique mechanical function of simultaneously superimposed full waves; full oscillation cycles, half waves; half oscillation cycles, and wavelets; variable oscillation cycles that can reside in a matrix that redefines the means and method of designing and implementing modulated magnetic moments as applied to all technological expressions that depend on any sort of periodic oscillation- wave structures. This novel approach is applied as a central means of propagating electromagnetic information from any point to any other point within the substrate layers of scalar arrays of printed circuit boards of nay device, proposed nano-technology implementations, globally deployed telecommunication systems, and extraterrestrial communication systems such as satellite technologies and communications between any type of space craft. The invention applies massive-material and massless-formations that comprise all known natural-spatial 3D information propagation such as light from the Sun. The basic geometric mathematical coordinate dimensions expressed as; X, Y, Z, expressed throughout this disclosure as XYZ1, XYZ2 and XYZ3. Each XYZ multiple-point signifies a fundamental three spatial dimensional point of view and nexus of measurement that combines of qualitative and quantitative functions. These simple symbolic constructs are the basis for three-dimensional qualitative logical state bounds provided by the inventions n-dimensional Wave Matrix Geometric Symbolic Construct (GSC) also defined as 3D Symbolic Container (SC).

The means and methods of Wave Matrix Mechanics move beyond the incomplete and complex code driven parameters that define, and at once limit the fields of Quantum Mechanics and Special Relativity. No longer is physics just focused upon the quantum of things, but upon how the quantum of anything is perceived and considered in relationship to how a particular quantum of anything is utilised and shaped qualitatively as an aspect of perpetual movement. The essential fact of infinite feedback of our massless-energetic and massive-material bound experience defined by what we cogitate from sources we now define as optical-light, olfactory-smell, auditory-hearing, tactile-kinetic; 3D phasec positioning and touch-which governs recursive responses as do all aspect of the senses. All senses are defined here as the aggregate assemblage of our ***perceptual presence,*** which relates and is directly applied to what can be defined as ***phase-space-place (PSP).***

Through the fundamental yet special 3D articulated mechanics of defining and utilising simultaneous superimposed wave functions the invention provide the Holophasec 3D Magnetic Moment (H3DMM) that is a core construct or the fundamental symbolic container (SC) of Wave Matrix Mechanics. The ***qualitative state*** of each synthetically modulated or natural magnetic moment directly correlates to in fact dictate the quantity, form and function of symbolic information that is oscillated-generated and propagated through any natural or synthetic channel space. Like Quantum Mechanics Qualitative Mechanical Logic (QML) considers multiple points of view or observation points in simultaneity as harnessed in fractal and or polygon vector coordinates that can be measured by the effect these associated variables have upon the whole effect of any technological system that Wave Matrix Mechanics is applied to. Yet QML breaks from quantum mechanics in that it does require a static point of view that dictates the fallacy that the act of measurement creates interference with respect to observing and measuring simultaneous symbolic states of anything. Our point of observation does change an object, the object changes our point of view can any means and method of entangled instrumentality and apparatus be reduced to a single point of view and therefore measure. The invention provides the Geometric Symbolic (GSC) as a three-spatial-dimensional Symbolic Container (SC) that is the 3D discrete symbolic element itself that contains multiple symbolic relationships that conversely connect continuously and constitute streams of Holophasec 3D information. During the act of wave and particle oscillation we dynamically shift out point view and take in the entire experience of the phenomenon we are observing by any form of natural or synthetic instrumentality. The GSC is comprised of multiple 3D vectors that geometrically wrap around a Wave Matrix and at once define each variable in terms of point of view or what is designated in this disclosure as the Holophasec 3D Sample that is simply defined in this disclosure as Phase-Space-Place (PSP) in order to introduce divergent patterns of interpretation of the inventions superimposed multiple wave state means and methods. PSP channels, PSP portals, and PSP samples are mathematical and spatial dimensional topologies that serve as separate functional extensions of Wave Matrix Mechanical apparatus and methodological protocols. A PSP channel contains and propagates all angles of view. In optics an angle of view is the information subtended by the lens. Wide lenses have broad angles of view. Telephoto lenses have narrow angles of view. Unlike film and other These three structural elements express the inventions fundamental that seamlessly interrelate to each other in terms of essential physical form and abstract function. A PSP channel, a PSP portals and a PSP sample are three dimensional channel logic topologies that are Holophasec 3D. Each provide variations upon fundamental stereoscopic utilization of any electromagnetic information known today such as full waves, half waves, wavelets, electrons, positrons, neutrons, particles, bosons, quarks, biological cellular structures, DNA and any other natural and or synthetic structure known in nature.

Each H3D Magnetic Moment is a unique qualitative logical state form that generates, across n-dimensional radian or any geometric phase-space and place (PSP) defined by the energy bounds of any communications and computational channel bandwidth or symbolic state bound that defines the channel, in the same way that each individual snowflake is propagated through the atmosphere that uniquely qualified with respect to its whole harmonic related holographic, hologra-phasec defined in this disclosure as a ***Holophasec*** state. From an energetic-massless, or material-massive state bound applied as point of view a snowflake produces a direct multisensory 3D visual image. The geometric topology of a snowflake could be reproduced with a strung maze of guitar strings and a unique polyphonic sound image could be generated. If one were to touch, pluck, or strike the snowflake-guitar string topology an auditory tactile kinetic as well as visual image could be realised within the substrate neuronet of the human brain that reproduces the preconditioned idea of snowflake in a much different way within the bracket of one perceptual presence. There is provided a Holophasec 3D Laser array that is comprised of a plurality of laser component configurations. Primary to the dynamic process and procedure of mapping each PSP sample is (1) variable 3D spatial dimensional-pulsed laser scanning and defining each periodic wave signature feature in terms of time domain and space coordinates within the local of the radian space geometric constellation model. The radian vector space geometric constellation establishes the outer physical bounds of the 3D radian vector coordinates and the inner topological bounds with respect to its over all harmonic symbolic value (HSV). (2) Geometrically linking all periodic wave signature features that comprise the Wave Matrix that comprises a Holophasec 3D Modulated Magnetic Moment. A periodic wave signature feature is comprised of wave peaks and troughs, and other unique wave inflection areas that comprise geometric structures that are defined by interrelationships of vector areas and the like.

A multiwave Wave Matrix magnetic moment can be seen as a Holophasec 3D snowflake that is comprised superimposed geometric elements that is shaped in one example as a radian space that possesses near infinite symbolic state bounds defined within a specific geometric bound that defines a specific piece of circular space and time. Consider polyphonic sound is comprised superimposed sound wave states bounds. These polyphonic states can be expressed as mathematical topological visual state bounds as defined by fractal-vector geometry, polygon coordinates and polynomial equations and the like. These states bound can be based upon arbitrarily set bandwidth; any dimensional combination such as three-dimensional frequency, three-dimensional amplitude, three-dimensional phase in terms of complete circular-radian phase relationships to any other point of mathematical measure in the radian sphere that is a world of its own. Such geometric shapes as fractal-trigonal, hyperbolic or any other shaped geometric fractal-polygon-vector defined within any portion of phase-space-place (PSP) can be utilised.

The invention applies full wave; full oscillation cycles, half wave; half oscillation cycles and wavelet; variable oscillation cycles configured in stereoscopic coding and stereoscopic geometric symbolic construct (GSC) element superposition. These novel wave structures originate from a stereoscopic emitter/exciter over any communication channel space to a corresponding stereoscopic exciter/emitter. The common idea of stereoscopic immediately produces the perception of duality because we are seeing with two eyes and object we are observing is third the component that creates a 3D stereoscopic perspective. Yet the process of observing any object in space and time is by definition an analysis function in relation to human acuity processing and technological instrumentality and its measurement processes. This 3D channel novel protocol process and procedure involves a minimum of three points of reference as fundamentally expressed as XYZ1, XYZ2 and XYZ3. One eye equals XYZ1, the other eyes equals XYZ2, and the object viewed or panorama observed is XYZ3 plus many other XYZ multipoints within the resolving power of instrumentality and apparatus applied with infinite variations of symbolic experience. Therefore the concept of stereoscopic perceptions relates to finite variations of symbolic observation and massive and massless symbolic information designation within any field of reference with any type of human sensory experience such as visual, auditory, olfactory, tactile kinetic, and the recursive feedback of all experience including direct touch.

Each node in the network that contains a Wave Matrix Mechanics stereoscopic emitter and exciter combination detects electromagnetic conditions of one channel and plurality of channels in a topology simultaneously. Superposition has been applied to waves whenever two or more waves travel through the same medium at the same time. The waves pass through each other without being disturbed. This has been observed in hydraulic environments, ocean waves and the like. The net displacement of the medium at any point in space or time is simply the sum of the individual wave displacements, yet this does have to be measured from any single point in space and time. We do not have to freeze frame nature to a single point to experience what we experience and observe and measure nature. This is true of waves that are finite in length full wave; complete oscillation cycle, half wave; half oscillation cycle, and wavelet; variable oscillation cycle pulses, of which are variations discrete sine waves coupled with linked geometric coordinate coding expressed as Geometric Symbolic Construct (GSC).

According to a first aspect of the invention, there is provided a method of generating Holophasec 3D Base Band carrier signals. According to the second aspect of the invention there is provided a method of generating and propagating Holophasec 3D Discrete State Logic with respect to the Holophasec 3D Transform (H3DTr). The Holophasec 3D Transform is comprised of a simple mathematical protocol that converts simultaneously propagated electromagnetic wave information into geometric coordinate information. The Holophasec 3D Transform (H3DTr) also converts Geometric Symbolic Construct (GSC) into simultaneously propagated periodic electromagnetic wave information within the bandwidth bounds of the Holophasec 3D Base Band Channel and each enjoined Holophasec 3D Emitter/Exciter array so utilised. Each element of the GSC defines a discrete symbolic state of mathematical information that creates a three dimensional coordinate that can be applied to create and convey any natural or synthetic increment of information. The GSC can comprised of any geometric formula that is based upon Euclidian Geometry, Poincare Geometry, Hyperbolic Geometry, Penrose tile math formulas, or any other form of geometry that can be used to efficiently specify a Holophasec 3D Transform protocol, process and procedure. The invention utilises Fractal Geometry, Polygon Geometric Structures, Vector Coordinates and many other forms that contribute to the inventions Holophasec 3D Qualitative and Quantitative Mechanical Function that is designed to provide a total harmonic function that will lead to a minimal use of numbers with relation to measuring symbolic coordinates.

According to the third aspect of the invention, there is provided the protocol, process and procedure primary and secondary Wave Matrix propagation. The primary Wave Matrix contains original symbolic information that is propagated from a selected Holophasec 3D Emitter/Exciter to one or a plurality of Holophasec 3D Emitter/Exciter arrays. The secondary Wave Matrix contains the same symbolic information as the primary Wave Matrix. However the secondary Wave Matrix acts as a mirror reflection that is the key element that enables an immediate recursive reflection from the exciter portion of the Holophasec 3D Emitter/Exciter array that first receives the primary Wave Matrix aggregation. Because of the spatial three-dimensional qualitative function, the secondary Wave Matrix is essentially bounced back to the originating Holophasec 3D Emitter/Exciter that sent the primary Wave Matrix. The secondary Wave Matrix can occupy the same channel space and time element as the Primary Wave Matrix. However the secondary Wave Matrix is bounced back to the originating Holophasec 3D Emitter/Exciter with a different 3D phase offset orientation.

### BRIEF DESCRIPTION OF THE DRAWINGS

The accompanying drawings, which are incorporated in and constitute a part of the specification, illustrate a preferred embodiment of the invention and together with a general description given above and the detailed description of the preferred embodiments given below, serve to explain the principles of the invention. It is to be understood that the particularity of the ensuing description does not supersede the generality of the foregoing summary of the invention.
Fig. 1, is a logical block diagram of the Wave Matrix Mechanics protocol, according to the invention.
Fig. 2, is a depiction of a Wave Matrix geometric constellation and protocol designations, according to the invention.
Fig. 3, is a rendering of the Holophasec 3D Wave Matrix engine, according to the invention.
Fig. 4, is a rendering of the Wave Matrix Mechanics communications channel with geometric symbolic constructs, according to the invention.
Fig. 5, is a geometric rendering of the geometric symbolic construct-polygon structure and protocols, according to the invention.
Fig. 6, depicts a Wave Matrix in various magnifications with an emphasis on the Holophasec 3D Sampling, according to the invention.
Fig. 7, depicts multidimensional Holophasec adaptive Qualitative Mechanical Logic protocols, according to the invention
Fig. 8, depicts a Holophasec n-dimensional spatial 3D Multiple Access network topology operating as public land mobile network, according to the invention,
Fig. 9, depicts a Holophasec n-dimensional spatial 3D Multiple Access network topology operating over a electrical power grid network, according to the invention.
Fig. 10, depicts geometric illustrations of the Holophasec 3D channel with reference the interrelationships of wave trajectory, according to the invention.
Fig. 11, depicts a novel graphic representation of space and time compression of modulated magnetic moments, according to the invention.
Fig. 12, depicts selected emitter an exciter geometric topologies, according to the invention.
Fig. 13, depicts the Holophasec 3D Transform (H3DTr) according to the invention.
Fig. 14, depicts a three wave Wave Matrix measured in terms of inflection area that comprises three dimensional symbolic function with respect to vector space, according to the invention.
Fig. 15, illustrates the energetic fusion that comprises the Holophasec 3D Base Band Carrier signal process, according to the invention.
Fig. 16, depicts the Geometric Symbolic Construct (GSC) coding function the Holophasec 3D Transform, according to the invention.
Fig. 17, depicts the three dimensional structures of the Holophasec 3D Lorentz A.I. Engine apparatus and the Holophase 3D Channel, according to the invention.
Fig. 18, depicts the logical diagram of the Holophasec 3D storage medium apparatus, according to the invention,
Fig. 19, depicts the Holophasec 3D Modulated Magnetic Moment as applied to electrical three and single phase electrical power conductors that are components of electrical power grid networks, according to the invention.
Fig. 20, depicts the three dimensional spatial structure of the Geometric Symbolic Construct (GSC) in terms of channel orientation, according to the invention.
Fig. 21, depicts the Wave Matrix Mechanics periodic electromagnetic structures used within the metallic conductor space of an electrical power grid network, according to the invention.
Fig. 22, depicts the fundamental three dimensional spatial relationship of the Wave Matrix Mechanical function that fully utilizes all geometric trajectories in radian space, according to the invention.

### DETAILED DESCRIPTION OF THE PREFERRED EMBODIMENT OF THE INVENTION

Nature is nothing 100% of the time. Our communication topologies and the information that flows through these topologies need to be a variable as nature, and still serve the requirements of providing a coherent and recognisable language. The invention provides this.

The invention provides three dimensional symbolic data communication over a wireless and fixed physical and logical channel communications network which propagates infinite symbolic states in the form of human and logical system communications within the constructs of electromagnetic moments that are generated, emitted, propagated and excited stereoscopically through any modulation channel communications channel space defined as radio, optical and or metallic; in the form of oscillating base band signals, radio frequency carrier signals, channel modulation signals, and virtual modulation protocols, each of which contains a multidimensional wave matrix magnetic moment that is Holophasec 3D, comprised of three or more superimposed electromagnetic waveforms that are structured as Geometric Symbolic Constructs (GSC) that are Symbolic Containers (SC). These containers can be mapped across existing circuit switched digital and analogue channels and packet switched channels that are used in current 2.5 G, 3G, and proposed 4G wireless network topologies that take the form of a wide range of mobile cellular, mobile trunked radio, and other star topology, mesh topology and other such telecommunication network structures. The invention provides n-dimensional symbolic multipoint to multipoint Holophasec 3D communication, the method including the steps of:

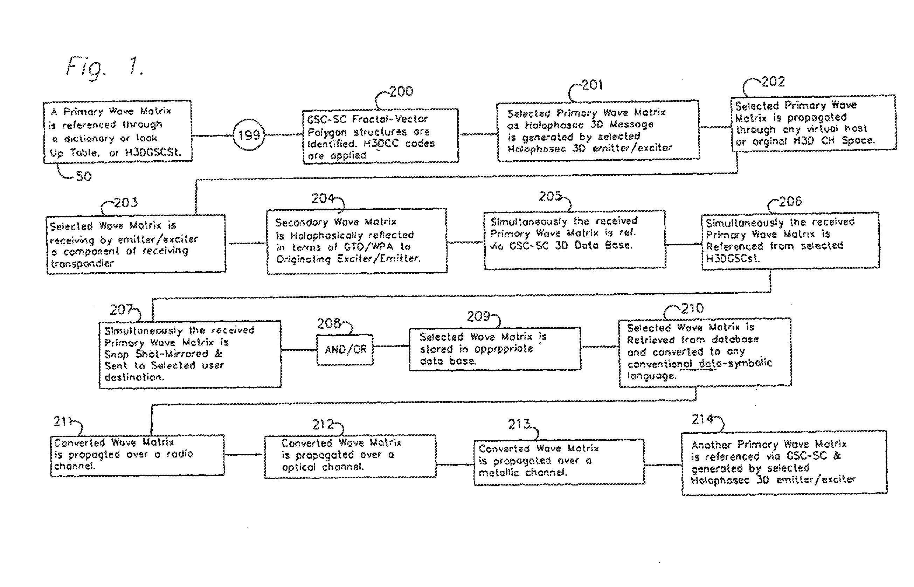

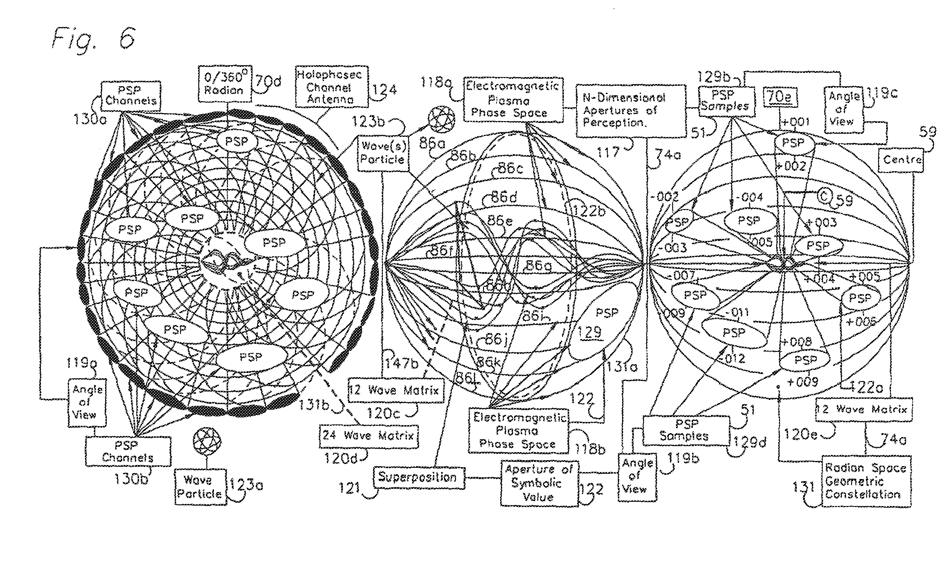

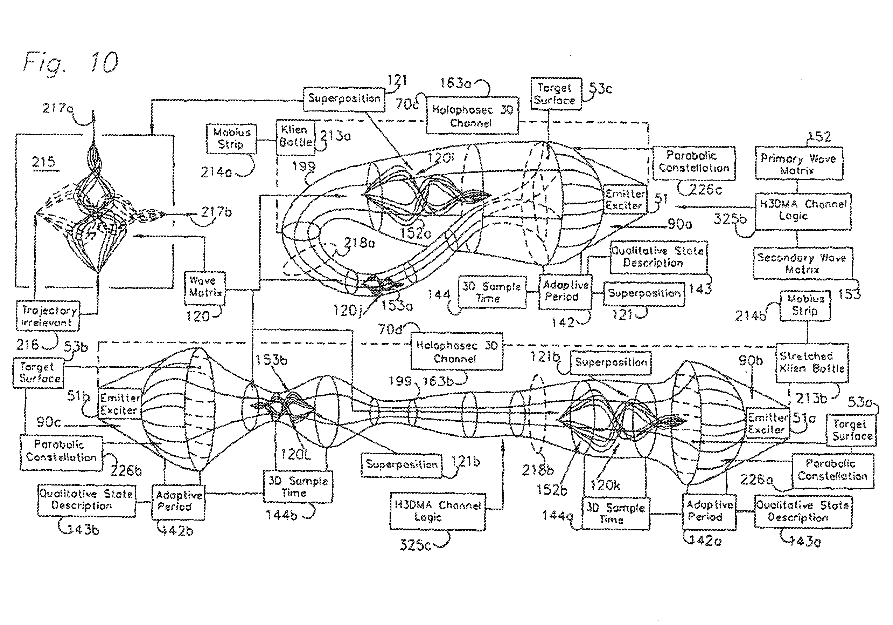

Referring to Fig. 1 and Fig. 10. Fig. 1 depicts a logical block diagram that describes the main protocol steps of the invention. In the body content depicted in Fig. 1 discloses the core constructs of the adaptive wave Matrix Mechanics channel and the three dimensional simultaneously qualitative wave function that encompasses the propagation of a plurality of superimposed periodic waves that define Holophasec 3D modulated magnetic moments (H3DMM). The structure of holophasec 3D magnetic moment within what we conventionally define as time and space is essentially configured as a radian space geometric constellation, simply because a radian space geometric constellation defines a clear model of a three dimensional geometric structure that is used to illustrate how to view and code any type of electromagnetic moment in the context of this disclosure. Referring to Fig. 6 there is depicted a radian space geometric constellation 131. In the centre 59 of this radian space is a Wave Matrix aggregation that is constructed from 12 simultaneously propagated periodic waves 120e. This point of view defines the Holophasec 3D channel centre 59, which defines the centre of the Holophasec 3D Channel 70d and 70e respectively. A Holophasec 3D Channel centre is a completely arbitrary point of view. The concept of the Holophasec 3D Channel centre is based upon complete flexibility as to how to define a channel centre in relation to what is the 3D symbolic emphasis.

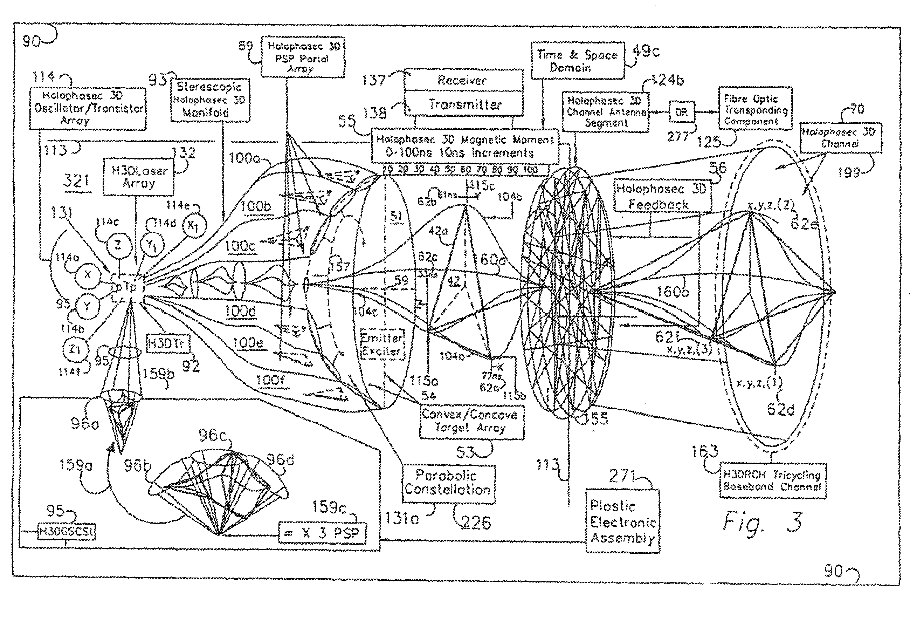

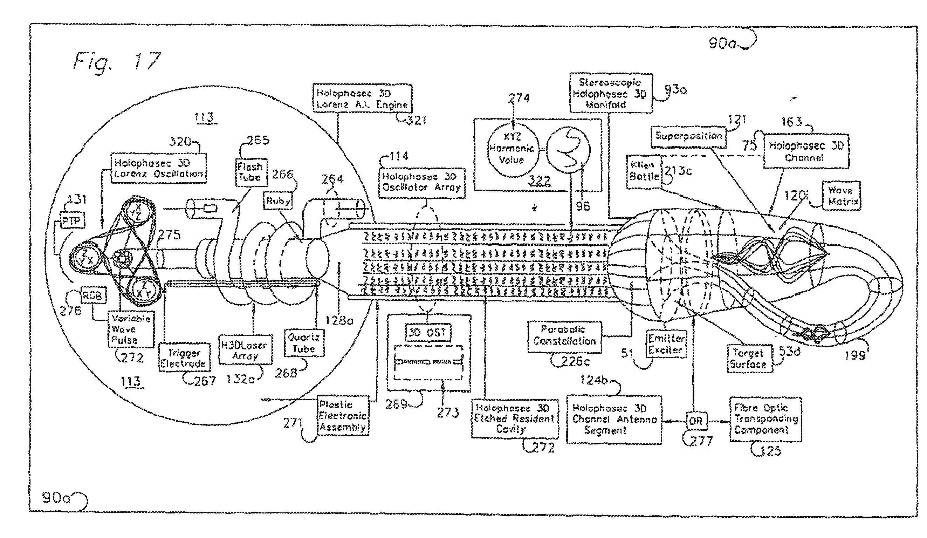

The radian space constellation that surrounds this 12- Wave Matrix plainly simply shows a geometric topology of three-dimensional circumference area that the Wave Matrix Mechanical function oscillates. The invention applies the radian space constellation like a biological cell that stretches, shrinks, elongates, twists, bends, and expands in accord with the topological shape of the Holophasec 3D Modulated Magnetic Moment that is desired for application specific usage and propagation through conventional and or H3DMA channel space. The invention provides substrate structures that enable the transport of Holophasec 3D Modulated Magnetic Moments through Holophasec 3D Sample portals that comprise the target surface 53a, 53b, and 53c Holophasec 3D Emitter/Exciter (H3DEE) 51, 51a, and 51b. The H3DEE is one the central component of the Wave Matrix Mechanical system designated as the Holophasec 3D engine 90 as depicted in Fig. 3. The engine generates Holophasec 3D Tricycling base band and Holophasec 3D discrete state logical structures that in turn create the Holophasec 3D Channel 163, 163a and 163b. This process occurs during dynamic simultaneous wave aggregation projection as shown in Fig. 10 and Fig. 17. This electromagnetic projection allows us to define the 3D symbolic value from the stereoscopic 3D perspective defined as a PSP sample.

Each PSP sample is comprised of multiple quadratic vector planes that is one of a plurality of mathematical methods that can be applied towards coding and creating Holophasec 3D Logic. These 3D vector coordinates are derived from using specialized algebraic mathematical quadratic equations that are one of the methods used to map the 3D vectors from channel centre measured within the spatial bounds of each radius vector. Each radius vector is a reference point that defines a physical position for PSP sample. A PSP sample can be a quadratic envelop that is a portion of a Wave Matrix that is positioned within the bounds of 3D radius vectors that comprise three-dimensional 3D spatial logic (3D-SP) which is crux of the Holophasec 3D Modulated Magnetic Moment (H3DMM).

Referring to Fig. 3, evident here is the geometric topology of the Holophasec 3D Engine 90. Each PSP portal 100a, 100b, 100c, 100d, 100e, and 100f is arrayed to cover the physical half radian topology 131a defined here as a parabolic constellation 226 provides infinite variations of stereoscopic 3D perspective point of view. The Holophasec 3D Manifold 93 is a generic 3D geometric manifold that expresses but one of many topological models that integrates seamlessly with the inventions H3D emitter/exciter PSP portal arrays, laser arrays, oscillator arrays, and any type of bus logic and the like. The generic Holophasec 3D Manifold 93 represents a topological model that provides an accurate template for guiding the geometric mapping procedure that signifies the 3D symbolic value of each PSP sample. Each PSP sampling point provides a plurality of overlapping stereoscopic perspectives that cover and contain the complete spherical radian vector space of the Holophasec 3D Modulated Magnetic Moment. These PSP portals define a geometric bracketed frame of reference that is derived from stereoscopically measuring all possible geometrical spatial modalities from channel centre 59 to the outer parameters of the Holophasec 3D Modulated Magnetic bound defined by the radian vectors of the radian geometric constellation model. The geometric symbolic construct (GSC) relationship is derived from mapping the PSP sample that each PSP portal defines in terms of defined geometric bounds. The Holophasec 3D Transform (H3DTr) embodies a parallel process of (1) mapping the geometric 3D vectors derived from the fractal and polygon structures that are the foundation of the mechanics of propagating and defining the symbolic Matrix value 3D wave structures. (2) In turn the Matrix value 3D wave structures define the GSC geometric structures. One key mechanical tool that performs the 3D mapping is the Matrix Mapper 158, 158a as shown in Fig. 3, Fig. 5 and Fig. 14 within the bounds of (1) a complete Wave Matrix and or (2) within the bounds of a PSP sample that encapsulates a stereoscopic portion of a Wave Matrix that contains symbolic information for a plurality of application specific users.

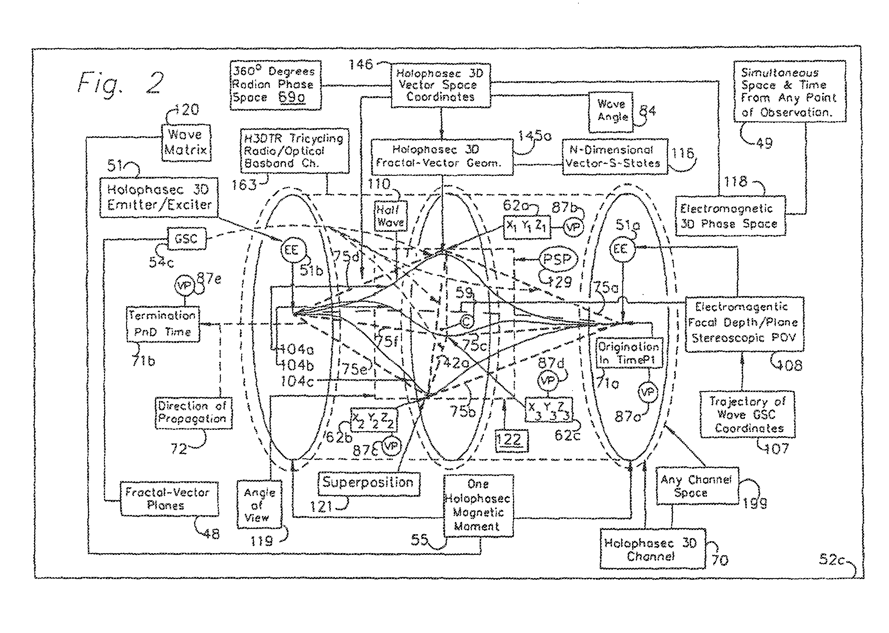

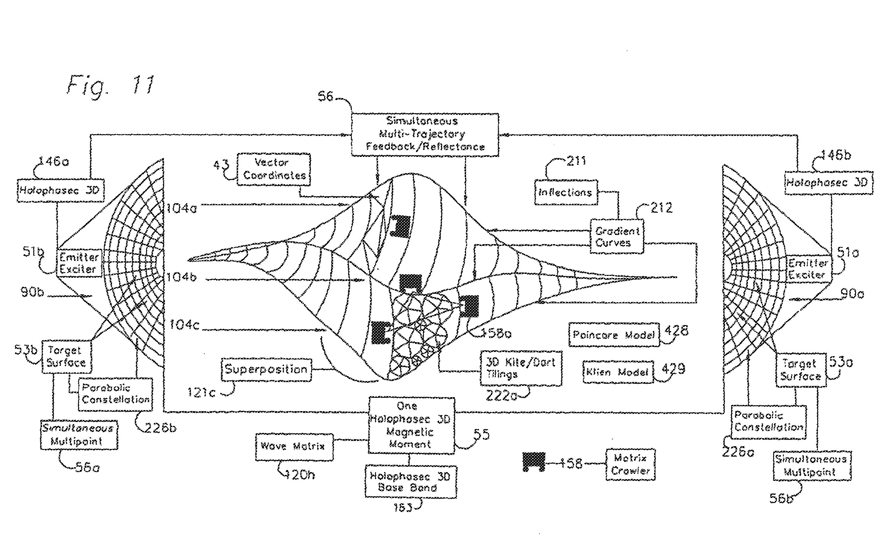

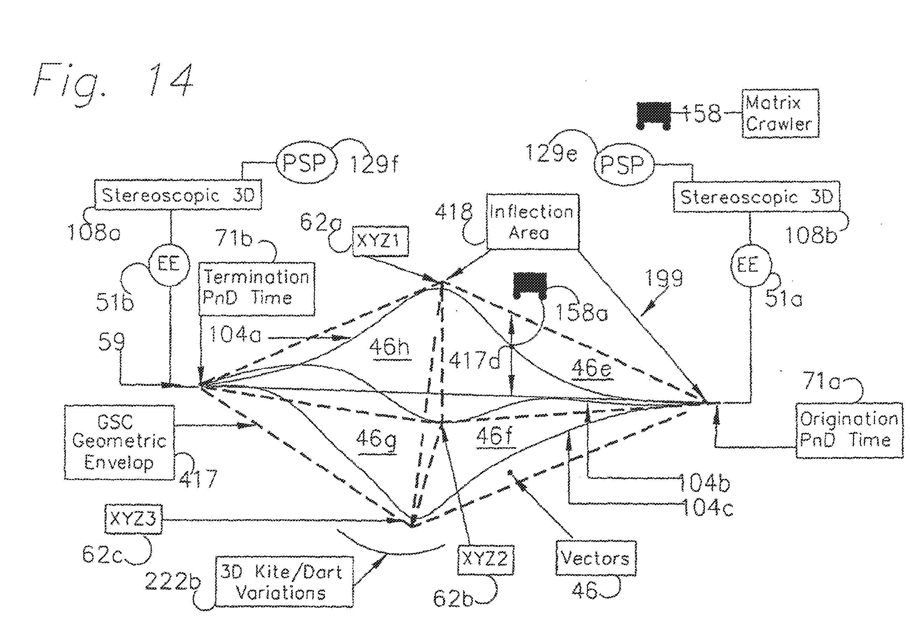

In reference to Fig. 3 there is provided a plurality of H3D Laser/Maser system array 132 configurations. These laser arrays are used to scan each PSP sample that is detected within the geometric and physical bounds of each PSP sample. The FBDlaser Array 132 can be comprised of a plurality of laser component configurations. Primary to the dynamic process and procedure of mapping each PSP sample is (1) laser scanning and defining each periodic wave signature feature in terms of time domain and space coordinates within the local of the radian space geometric constellation model. The radian space geometric constellation establishes the outer physical bounds; time and space bounds of the 3D radian vector coordinates and the inner topological bounds with respect to its over all harmonic symbolic value (HSV). (2) Geometrically linking all periodic wave signature features that comprise the Wave Matrix that comprises a Holophasec 3D Modulated Magnetic Moment. A periodic wave signature feature is comprised of wave peaks and troughs, and other unique wave inflection areas that comprise geometric structures that are defined by interrelationships of vector areas and the like. For example depicted in Figs 11 and 14 are the wave mapping processes. In Fig. 3, there is provided a H3D GSC data storage system 95. The H3D GSC storage system is comprised of a plurality of PSP stored samples 96a, 96b, 96c and 96d. Each PSP portal 100a, 100b, 100c, 100d, 100e, and 100f provides the means of reading and mapping each PSP sample that comprises a complete Wave Matrix Holophasec 3D Modulated Magnetic Moment when it is received and detected the Matrix Mapper 158 rapidly maps the complete three dimensional 3D geometric constellation of each PSP sample 96a, 96b, 96c and 96d. A plurality of PSP stored samples, comprise a symbolic dictionary. For example PSP portal 100a has received a PSP sample 96a that is detected by the Matrix Mapper 158, which stored in the H3D Engine 90 GSC database 95. This PSP sample 96a is a symbolic component of the Holophasec 3D Modulated Magnetic Moment 55 which is comprised of the same Wave Matrix 120 that is depicted in Fig. 2. This Wave Matrix is comprised of three periodic waves 104a, 104b and 104c, which also are depicted in Fig. 3. This simple example contains a plurality of PSP samples. The Matrix Mapping process continues. For example PSP sample 96b is detected in PSP portal 100b, PSP sample 96c is detected in PSP portal 100c, and PSP sample 96d is detected and mapped in PSP portal 100d and so forth. A single Wave comprises the geometric structures of a plurality of PSP samples that are the components of the complete radian geometric constellation, which is the geometric topological model for the Holophasec 3D Modulated Magnetic Moment.

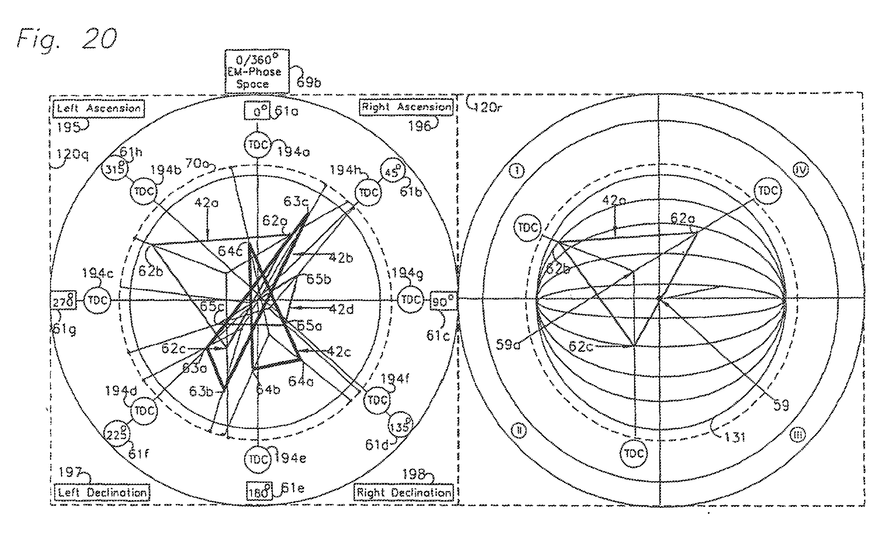

The invention provides an infinite plurality of symbolic dictionaries. Each dictionary relates to an application specific purpose. A symbolic dictionary can simply relate to text information. A symbolic dictionary can also relate to a manufacturing CAD/CAM geometric language that relates to manufacturing material or any other technological structure, apparatus or protocol construct. A symbolic dictionary can also contain geometric components of a visual and or sound hologram. The invention provides a plurality of application specific devices that utilize the Holophasec 3D Engine 90 as an integral c technological component. In terms of transmitting or emitting a PSP sample, the H3D GSC storage database 95 is accessed when an command instruction set is received from a user via human machine interface (HMI) to send a particular message, the Matrix Mapper 158 is used to identify the appropriate stored PSP sample in this case PSP sample 96a, 96b, 96c and 96d. Referring to Fig. 20 the radian space geometric constellation 131, a spherical geometric shape, that depicts the 3D sin-cos-sin formation and function can also be described as a spherical shape from any perspective simultaneously. The term Holophasec 3D is clearly expressed visually in this rendering. For like a hologram the 12- Wave Matrix 120e as shown in Fig. 6 can be viewed and geometrically calculated from an infinite variation of perception, additionally the enveloped 12- Wave Matrix 120e projects its three-dimensional symbolic states in all possible trajectories, se projected symbolic variations are positioned and act as PSP portals a unique stereoscopic point of view (POV) in terms of defining three-dimensional Holophasec samples when analysed by wave detection and symbolic dictionary systems that are essentially to all communication systems and apparatus. These samples are codified within the spatial bounds of plurality of PSP Sample 129b and 129d respectively.

In this radian space 131 each PSP sample defines a Holophasec-Stereoscopic 3D angle of view 119c. The angle attitude defined here is fundamentally measured as a trigonometric function of the angle from centre 59 of the channel, which is the spatial position of the 12 Wave Matrix 120e. In this we see the functions of angles in defining the mechanical 3D symbolic function of measuring the geometric differentiations combined wave values. The Holophasec 3D Stereoscopic viewpoint establishes the means of defining the rotational motion of the Holophasec 3D Transform protocol that is referenced to the 12 Wave Matrix 120e at its centre which is always the dynamic floating focal point of the carrier base band Holophasec 3D Channel Centre 59 at the carrier base band centre which is based upon the channel bandwidth in kHz and the aggregate 3D frequency, 3D amplitude and 3D phase state of the resident channel. Measuring the distance between carrier base band channel centre each simultaneous propagated Wave Aggregation, and the Geometric Symbolic Construct (GSC) is defined from measuring each wave signature element from that centre point, based upon the time and space measurement of any Holophasec 3D Modulated Magnetic Moment as shown in Fig. 20. IN Fig. 20 the logical Holophasec 3D Channel Referring to Fig. 3 there is provided a means of enabling a multiple Matrix Crawler Each separate angle of view defines a particular viewpoint that reveals a particular constituent symbolic element that defines an increment of a user message from a defined perspective. This defined perspective is designated as a 360° spherical phase position that is a physical point of view in relation to this radian space, with respect to a particular physical place. This is the simple approach to PSP.

The invention utilizes of a plurality that is one core construct that is derived from infinite geometric variations that can be applied to the harnessing the inventions Holophasec 3D Modulation Magnetic Moment that is based upon the simultaneous aggregation of three or more simultaneous periodic waveforms across any conventional or Holophasec 3D Channel 199 In fact when the inventions means and methods are applied to existing baseband, carrier modulation or logical channel that is utilised within the physical constructs of a radio channel, an fibre optic channel, a laser channel, a metallic telephony channel, an electrical power grid metallic conductor, or any wide spectrum parameter such as define in ultra wide band (UWB) frequency space becomes a Holophasec 3D Channel 199 by default.

The infinite variability of the geometric constellation available to contribute the means and methods of the invention infinite Holophasec symbolic state bounds that is defined as 3D logical coding which can be expressed in terms of fractal- vector coordinates, polygon-vector coordinates, Euclidian geometric coordinates, hyperbolic geometric coordinates, geometric tilings based upon 3D tile math coordinates, and or any other form of known geometric constellation that is defined by any known mathematical equation. These geometric coordinates define the topological parameters of the contained electromagnetic energy expressed as Wave Matrix waveforms in all the infinite symbolic variation capabilities. The inventions three dimensional 3D coding can take any geometric shape that may be adaptable, thus optimising the overall performance to any selected communications channel, integrated circuit, microprocessor, transistor, plastic electronic subassembly environment that exist or will exist on the planet today.

In Fig. 10 Wave Matrix 120 trajectory and orientation is irrelevant 216 as long as the emitter/exciter 51, 51a, and 51b successfully originates, propagates, terminates-detects and identifies its unique symbolic value from end to end of the projected trajectory path so selected. The infinitely malleable Klien Bottle shown here is an excellent geometric model that expresses the geometric flexibility of the Wave Matrix 120. The Klien Bottle here defines the Holophasec 3D Channel 70c and 70d in its original configuration 213a and a stretch version 213b respectively. These geometric topologies are excellent channel constellation models that illustrate the recursive-fused nature of the Holophasec 3D Channel 70c and 70d as shown in Fig. 10. The multi-wave superimposition 212 as shown here as a Wave Matrix 120 Torus topology a 215, and as Wave Matrix in channel 120i, 120j, 120k and 120L illustrate the multiple simultaneous superimposed wave matrix structures.

The fundamentals of the Holophasec 3D relationships of three or more waves eliminate destructive interference simply because the core nature of the Holophasec 3D process in one that constantly oscillates no matter what, and is in constant state of movement. Once a hologram is recorded the content or image elements becomes more or less a static with respect to how humans currently attempt to view phenomenon in increments of singular states which by definition is impossible.

These well known geometric structures codify and also produce the n-dimensional symbolic language that is produced for practical telecommunications and computational functions. As shown in Fig. 10, central to a Klien Bottle's topology is the Mobius strip 214a and 214b that in fact comprises the mathematical fourth dimensional structure of geometric topology of the Klien Bottle 213a and 213b respectively. A Mobius strip is the classic geometric model of a non-orientable surface. A Mobius strip only has one side and one edge which is viewed, yet is it can be twisted and shaped in an infinitely diverse configuration that produces multiple points of view simultaneously. The Mobius strip is physically definable in terms of its geometric topological possibilities, and can be used as descriptive model the Wave Matrix Mechanics Holophasec 3D communications channel. It's possible to create a variety of three-dimensional variants of the Mobius band. By physically thickening a standard Mobius strip so that its edge becomes as wide as the strip's side produces a three-dimensional object with a square cross section as expressed in both Klien Bottle geometric topologies shown in Fig. 10. The resulting form has two edges and two faces which geometrically allow for direct feedback within the electromagnetic focal plane, focal depth and depth of field that is produced between depicted emitter/exciter 51, 51a, and 51b configured as a parabolic constellation 226a, 226b, and 226c that are integral components parts that define a particular configuration of a selected radio, fibre optic and or metallic communications channel transponder/transceiver architecture that interface with any transmitter, receiver and antenna combination known in the art today. Additionally the invention provides completely novel approaches to radio antenna design and installation configuration. All of these elements electromagnetically, mechanically and physically define the inventions Holophasec 3D Channel 70c and 70d that is interfaced within the non-oriented channel space 218a and 218b shown here.

Wave Matrix Mechanics also relates to and utilises Hyperbolic Geometry and any other form of known geometric topologies and the mathematical formulas that used to define the inventions unique 3D logical codes for the purposes of expressing and harnessing multidimensional symbolic coding. The Klien model and Poincare Model are core examples of Hyperbolic Geometry. Hyperbolic Geometry approaches angles from a different perspective than Euclidean Geometry, and enables much more flexibility in terms of producing n-dimensional symbolic state bounds. For example the invention provides Holophasec 3D etchings methods that enable vast improvements for disc storage and playback systems such as compact discs (CD), mini discs, flash drive mediums, computer hard drive systems, floppy discs, and any other conventional data storage medium. The invention provides spiral vortice signatures that enable a novel means of Holophasec three-dimensional 3D magnetic, optical, passive and active biometric read and write capabilities. These unique Holophasec 3D storage modalities include novel means of optical labeling that provide vast improvement for barcode technology, both in the labeling and scanning and reading means and methods. The invention provides Holophasec 3D spiral vortice labels that are rendered as optical and magnetic holograms that can be applied to any surface or medium such as smart card technology, magnetic strips and the like.

The invention provides Holophasec 3D etching methods and symbolic formats that enable the replacement of pits with equal zero and lands equal one. The invention introduces full three-dimensional 3D spiral vortice topologies that provide 3D geometric etching modalities such as the inventions Holophasec 3D parabolic etching, used for storage; read and write disc arrays. These H3Dparabolic etchings replace the pits and lands that are widely used throughout disc technology encoding within the dye substrate of the recording material. (Blue Lasers no reflectance )For example a compact disc (CD) is a flat, round, portable storage medium. This medium enables information storage by using microscopic pits and lands that reside in the middle layer of the disc. In a conventional storage medium the land causes light to reflect, which is read as binary digit 1. Pits absorb the light and this absence of light is read as binary digit 0.

A compact disc stores items in a single track, which is also divided into evenly sized sectors that spirals from the centre of the disc to the edge of the disc. Variations of the compact disc designed for use with computers include CD-ROM, CR-R, CR-RW, DVD-ROM, DVD-RAM, DVD-R, DVD+RW and PhotoCD for example. The invention also applies Holophasec 3D Etching to computer hard drive mediums. Wave Matrix Mechanics Holophasec 3D etchings is designated here as an H3Detching. One H3Dethcing contains true three-dimensional 3D spatial information form in harmonically arranged waves. H3Detchings can be configured in spiral-vortice geometric patterns, parabolic patterns, 3D fractal topologies and the like. One etching replaces the pit and the land and therefore dramatically increases disc medium bandwidth, and introduces true three-dimensional information storage, recording and playback capabilities using the means and methods ascribed by Qualitative Mechanical Logic and its progeny Wave Matrix Mechanics. In Fig. 1, a Wave Matrix is referenced through a binary one dimensional data register, and or a two dimensional binary data register, and or a three dimensional Holophasec 3D GSC-SC Storage (H3DGSCSt) dictionary or look up table 50, any channel 199 regardless of the medium can be configured as a Holophasec 3D channel. Next step entails how appropriate GSC-SC fractal-vector or polygon structures are identified and Holophase 3D Cryptographic Codes (H3DCC) are applied 200. The corresponding Wave Matrix Mechanics Geometric Symbolic Construct that contains desired 3D message is generated 201. Simultaneously the selected Wave Matrix is propagated through any selected channel space 202 as a first order of massless magnitude. First order of Wave Matrix is received by exciter/emitter as component of receiving transponder 203. A Wave Matrix is defined in two classes; primary Wave Matrix and secondary or reflected Wave Matrix is one of the core formations of Holophasec 3D Conjugate Symbolic Fusion (H3DCSF). The primary Wave Matrix is simply the Wave Matrix that is transmitted from an emitter/exciter that contains a three dimensional 3D symbolic message.

Any turning or bending gradient that can be defined as an inflectional element can be used by the invention to indicate change curve from convex to concave to for example, these changes can be applied to any symbolic case so intended. Each inflection area can be mapped geometrically in such a way as to express vector spaces that can be expressed mathematically as fractal-vector, polygon-vector or any other such geometric formation entered into this disclosure. An inflection area can be signified as unique geometric constellation within the confines the geometric envelop 417 so defined by the mathematical procedures of the invention. Each compared inflection form can be defined and compared within the geometric envelope that contains a specific unique vector space 76. This particular vector space is bounded by XYZ vertice point 62a, and 62b and origination point in defined space 71a. Contained in the 3D vector spaces 42, defined here as 42e as vector space or plane as bounded by origination point in defined space and time 71a, XYZ1 62a, and XYZ2 62b. Vector space 46f is bounded by origination point in physically defined time and space 71 a XYZ2 vertice point 62b and XYZ3 vertice point 62c, and vector space 42g bounded by origination in physically defined space and time 71 a and XYZ1 62a and XYZ3 62c respectively are geometrically defined wave inflection areas that possess symbolic value that can be conveyed through any communications channel. The invention utilises three or more compared full waves-full oscillation cycle, half waves-half oscillation cycles, or wavelets-variable oscillation cycles that directly relate to actual geometric coordinates in Holophasec 3D channel space, that can be defined by Euclidian Geometric laws, hyperbolic laws, Poincare geometric rules, terms used in holomorphic mathematics and the like, and geometric relationships related in Hubert space, Minkowski space, Hamiltonian space and the like. By introducing a minimum of three XYZ vertice points that express geometric constellations of infinite diversity the potential for symbolic state bounds is virtually unlimited when applied to three wave assemblages that comprise one multiple Wave Matrix regardless of the point of view observed as any PSP. Each wave possesses its own flexible symbolic state that relates directly to the form of energetic state so desired for a specific geometric symbolic construct (GSC) to be generated and generated. Each full wave, half wave and or wavelet is manipulated by dynamically controlling amplitude, frequency and 3D phase relationships expressed in the n-dimensional symbolic spatial dimensions that relate to stereoscopic 3D wave focal plane/depth of field points of view (POV) that exists of field between emitter and exciter without increasing noise or any other undesirable anomaly.

Any point of view can be defined as angle of view when measured from any wave angle as compared to channel centre, channel bandwidth bounds, and the physical space that exists any emitter and exciter 51a and 51b that exists within any known channel space based upon radio, optical, and or metallic mediums that is defined by space and time variables of measure. Completely mallueble three wave plus combined in one wave matrix magnetic moment completely free the communications channel to operate to its full symbolic and energetic potential. Wave Matrix Mechanics introduces the full utilisation of the three spatial dimensions that define infinite phase trajectories from a wave matrix centre to all directions of possible combined wave geometric coordinate propagation as viewed, coded and constructed from a stereoscopic 3D point of view 108 as defined by infinite variations of phase-space-place (PSP) 129 that captures in Euclidian geometric coordinates the aperture of symbolic value 122 as shown in Fig. 2.

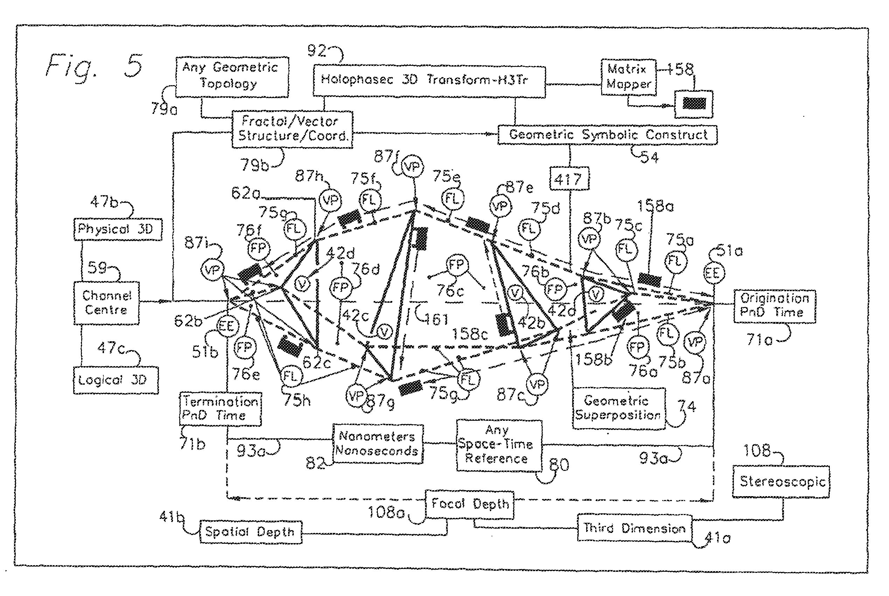

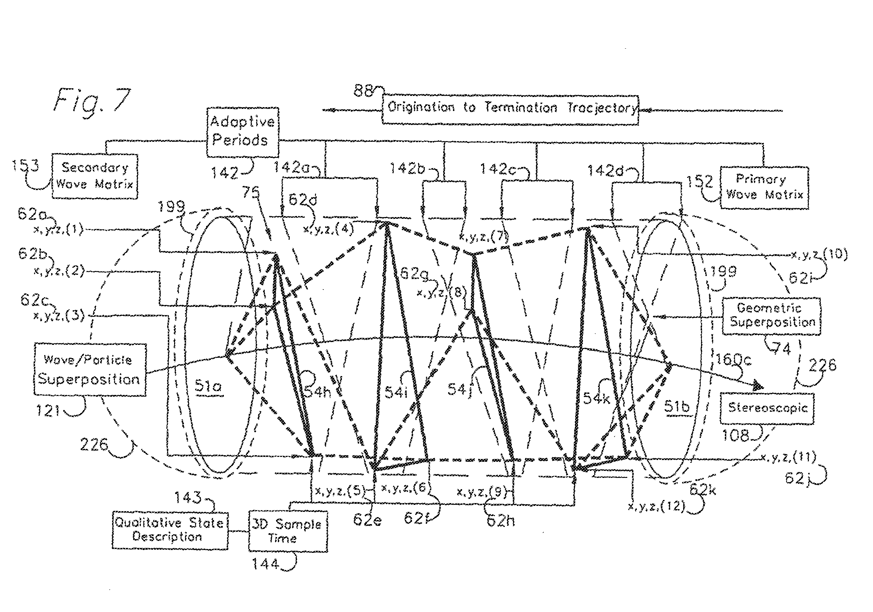

Referring to Fig. 5, Fig. 7, Fig. 11, Fig. 12, Fig. 13 and Fig. 14, there is depicted in multiple examples shown here, the novel processes and procedures that are the fundamental mathematical protocols that express Qualitative Mechanical Function (QMF) of Wave Matrix Mechanics. Specific practical methods of the Qualitative Mechanical Function is the three dimensional Holophasec 3D mapping procedure that captures the novel means and methods of the Holophasec 3D Transform (H3DTr). The H3DTr converts Wave Matrix aggregations into three-dimensional geometric constellation coordinates. Conversely the H3DTr also converts three-dimensional geometric constellation coordinates into Wave Matrix aggregations accordingly. The H3DTr defines the multiple means and methods of producing three dimensional logical coding structures; that capture the symbolic coordinate value of the Holophasec 3D Magnetic Moment. The Holophasec 3D Magnetic Moment mechanical function is the foundation of all Holophasec 3D Modulation Methods, processes and procedures. Referring to Fig. 5, depicted here is the fundamental logical expression of four Wave Matrix aggregations layed out in a concatenated topology. There are four Wave Matrix discrete three wave aggregations signified here as continuously linked geometric symbolic constructs (GSC) 54. The combination of discrete three or more Wave Matrix aggregations coupled with continuously linked geometric element structures comprises the introduction of continuous discrete state (CDS) three dimensional logic that can be generated and propagated through any communications channel space. This fundamental structure enables in one sense the first practical propagation of quantum communications protocols through a classical channel space. The invention provides true three spatial dimensional logic that enables infinite multidimensional symbolic state bounds within the frequency, phase and amplitude bounds of any analogue baseband channel and the communications network topology that is created from a plurality of physically and logically linked channel structures. Each primary vector 42a, 42b, 42c and 42d geometrically defines a three wave matrix aggregation. Primary vector 42e is shown to express an important structural component of Holophasec 3D spatial dimensional logic.

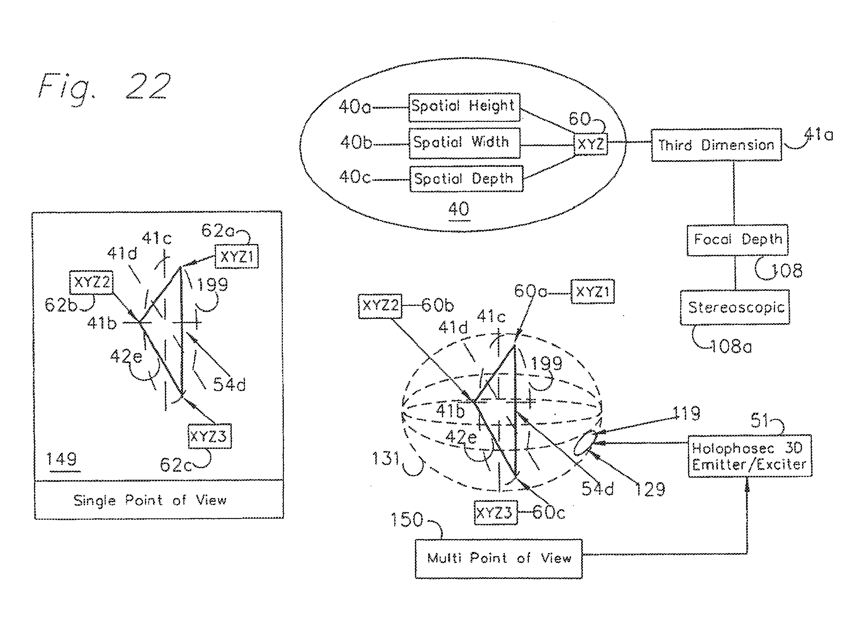

In Fig. 22 a primary vector 42e comprises three vertice points (VP) XYZ1 60a, XYZ2 60b, and XYZ3 60c. These are the same type of vertice points 62a, 62b, and 62c that designate XYZ1, XYZ2 and XYZ3 respectively in Fig. 5 as well as Fig. 2, Fig. 3, Fig. 4, and Fig. 7 respectively. In Fig. 5 each vertice point (VP) 87a, 87b, 87c, 87d, 87e, 87f, 87g, 87h and 87i also signifies the same XYZ related vertice points. In Fig. 22 Spatial Height 40a, Spatial Width 40b and Spatial Depth 40c can be defined from any stereoscopic 108a XYZ perspective 60. However because of the one dimensional limitations of this document and how the disclosure in expressed there is a need to define these spatial dimensions separately. However the inventions means and methods are not limited to the confining parameters of the conventional mediums applied here to contain this disclosure. Accordingly each XYZ vertice point can also be defined as a three dimensional points of view (POV). Looking at the Fig. 22, any channel 199 can be defined in three spatial dimensions. Each XYZ point of view from a relative position possess optical focal depth 108 and is complete definable without approximation in the Third Dimension 41a. This vector possesses spatial height 41 c, spatial width 4 Id and spatial depth 41b. Wave Matrix Mechanics completely utilises all the space available that comprises any channel that is physically and logically defined.

Instrumentality is applied that is integrated to apparatus that is configured to observe said symbolic information from any Holophasec 3D Sample space point of view, defined as angle of view, phase-space-place (PSP), and any other means that includes but is not limited one dimensional parameters. Stereoscopic 3D parameters provide the means and methods of observing, qualifying and quantifying phenomenon from multiple points of view simultaneously. The term stereoscopic 3D also simply relates to a novel perspective and a method of (1) observation and defining a Holophasec 3D Magnetic Moment (2) of observing channel space from any point of observation and trajectory of a Wave Matrix propagation. There are many ways both in mathematical terms and by means of apparatus to define, articulate a true three-dimensional perspective. Therefore any mechanical means that a piece of space and time is bracketed, it can be viewed, and defined as three spatial dimensions no matter how many ways abstract mathematical procedures can be applied to the same bracketed piece of space and time. A photon, electron, proton, neutron, electromagnet periodic full wave, half wave and wavelet is defined as a massless increment of a piece of energy. Yet by bracketing these pieces of energy into a definable reference point such as a wave matrix, and defining a geometric topology within the distinct framework of the disclosed unique signatures of the wave matrix, these massless waves and particles, each a piece of energy can be treated symbolically as massive object in space and time that possesses form, and performs a multidimensional mechanical function.

Recording on film or video medium numerous angles of view of a scene, and then storing the frames holographically make a Holographic Stereogram. Each eye views a different frame, displaced so as to result in the experience of a stereoscopic 3D image. Traditionally we have tended to view this phenomenon as an illusion when in fact it is how we naturally view and observe experience. PSP in this case relates how stereoscopic bracketed frames of reference are applied, and at its core describes how to define multidimensional information as a multipoint of observed phenomenon that cannot be reduced to singularity. This frame of reference is a Holophasec 3D Sample. This Wave Matrix sample comprises a portioned bracket of a minimum of three simultaneously generated and propagated periodic waves, wavelets or particles that at once define one or an infinite plurality of symbolic state bounds from this same bracketed Wave Matrix.

As illustrated in Fig. 2 a Wave Matrix is ***holophasically*** defined in terms of a ***three dimensional logic*** that is geometrically derived as stereoscopic code that produces geometric symbolic construct (GSC) symbolic containers (SC) 54 that can comprise fractal-vector structures, polygon-vector structures, tiling structures and any other geometric system of reference that can be utilised efficiently to be applied to the Holophasec 3D Transform (H3DTr). These structures possess predetermined n-dimensional geometric coordinates, derived from selected signatures that are endemic to multiple full waves, half waves and or wavelets; particles and atomic structures traditionally attributed to massive-matter interpretations. These three dimensional signatures are bracketed; gradient curves, inflection slopes and or any other unique signature reference that a matrix of waves can derive. The invention provides geometric symbolic constructs (GSC) symbolic container (SC) 54 fractal-vectors structures 145 to be transmitted directly throughout any conventional or future telecommunications network topology and the like. The geometric symbolic construct (GSC) symbolic containers (SC) 54 vertices are derived from measuring each information bearing parameter of the wave such as a peak, trough, hyperbolic gradient slope comparisons with every other wave curvature element, and or other distinctive signature element, and ordered via a template defined by a selected geometric constellation as a means for continual simultaneous emission/excitation and referencing of wave matrix defined multidimensional symbolic and geometric coordinate states. The invention also provides self-adaptive capabilities by introducing Wave Matrix Mechanical Holophasec 3D feedback. The invention produces continuous-discrete-state (CDS) fractal-vector, polygon-vector, tiling-vector as interlocking GSC-SC geometric coordinates with three or more unique periodic waves and or, wavelet configurations per modulated magnetic moment with dynamic adjustment of symbol scales based upon immediate evaluation of direct feedback from every Wave Matrix that is propagated through any defined conventional or newly created channel space regardless of the medium applied too; radio, optical and the like. The inventions enables the complete capture of a three dimensional information in Holophasec 3D Magnetic Moments, also known as time space fields of reference, disassemble the information and reassemble the information without losing any resolution or granularity derived from the original information that is recorded, disassembled, propagated across any channel space and reassembled for the purpose of observation and utilisation. The invention provides the first means and method of three dimensional information assembly and disassembly in the history of technology. Each Holophasec 3D Magnetic Moment is a functional piece of geometric defined information. A defined plurality of qualitatively and quantitatively definable information that comprises a three dimensional message such as an image, computer generated coordinate derived from polygon structures can be disassembled and propagated across any selected Holophasec 3D Channel space and reassembled for any type of utilisation.

One of the many geometric systems the invention uses is fractal geometry to express and code the inventions Holophasec 3D modulated magnetic moment. Fractal geometry has traditionally been used to express images of natural topography and mathematical expressions of Chaos Theory and other such experiments. The relativistic proportions expressed in fractal images of Mandlebrot sets and Julia sets are some examples. In fractal geometry a straight line has a dimension of one. A fractal curve will have a dimension between one and two depending on how much space it takes up as it twists and curves through a hyperbolic topology, and or a three dimensional gradient curve. For example a geometric formation that forms a 'mountainous fractal scene' will reach a mathematical dimension somewhere between two and three. So a fractal landscape made up of a large mountain range covered with plateaus and valleys would be close to the second dimension, while a rough surface composed of many medium-sized hills would be close to the third mathematical dimension. The geometric dimensional space of a Wave Matrix can fall within the bounds of the geometry that comprises for one example a multi-trigonal crystalline structure that is easily identified by examining any well-cut large carat diamond shaped like a stretched radian geometric constellation is one of the models that the invention uses to three dimensional code a Wave Matrix aggregation that is a mechanical function of a Holophasec 3D Modulated Magnetic Moment.

A Wave Matrix that contains three, six, nine, twelve or more simultaneously generated can be defined mathematically by fourth, fifth and sixth polynomial equations and the like. In the same way a Wave Matrix as defined in geometric radian space, can be defined by the elegance simplicity of fractal geometry in the three or more i.e., n-dimensional possibilities in both mathematical dimensional structures and spatial dimensional constructs that completely fill the defined space with the inventions three dimensional symbolic structures. These Wave Matrix Mechanical structures exists between two or more selected Holophasec 3D Emitter/Exciter installations that reside within the physical structures that comprise the three dimensional physical space and time of a Wave Matrix modulated magnetic moment. As heretofore disclosed, an assemblage of fractal mountainous structures can be disassembled, propagated over a Holophasec 3D Channel and reassembled via apparatus and utilised in any prescribed means and method. A Wave Matrix Magnetic three-dimensional information field is what is technically defined in this disclosure as a Holophasec 3D Magnetic Moment (H3DMM). This 3D magnetic moment occupies the same time and space in a defined radio, fibre optic or metallic communications channel modulated magnetic moment that is occupied by one conventional sinusoidal wave. Such channel space is electromagnetically defined in this disclosure as optical, because any spectral range of light is by definition an optical medium that potential contains massive symbolic information. A radio signal is an optical energetic construct. The invention applies and or produced between the oscillating intervals at 50 and 60hz that are generated and propagated within the interval that exists between the positive and negative fields of electrical energy that is distributed over electrical power grid networks.

Referring to Fig. 2, depicted here is a Wave Matrix comprised of the same three periodic waves 104a, 104b, and 104c that comprises a piece or a time and space field of three dimensional information as a side view of the Holophasec 3D Channel 75 as defined by the Holophasec 3D modulated magnetic moment. This example contains a single Wave Matrix 120 that is comprised of three periodic waves. As heretofore disclosed one Wave Matrix is an aggregation of three or more propagated periodic waves. One three Wave Matrix creates and defines a Holophasec 3D modulated Magnetic Moment 55. A Wave Matrix that contains from three to n- infinite aggregations of simultaneously propagated waves, that are localised within the geometric perspectives of 360° degrees of radian phase space 69a is still defined as one Holophasec 3D Magnetic Moment 55. The only limitation of the quantity of Wave Matrix aggregations that can be combined in a single Holophasec 3D modulated magnetic moment are the bandwidth granularity limitations of the host channel structure that the inventions means and methods are applied to.

Referring to Fig. 3. Each 360° degrees of radian phase space can also be viewed as a spherical geometric form that enables infinite angles of view or observation point of view possibilities called PSP 129. A Holophasec 3D Magnetic Moment is completely populated by a plurality of periodic waves that are propagated throughout all three spatial dimensions that comprise the electromagnetic space that is created between a Holophasec 3D Emitter/Exciter 51 when a Wave Matrix aggregation is propagated as a Holophasec 3D modulated, magnetic moment. Referring to Fig. 2 this activity defines the Holophasec 3D Channel 75, that exists between the originating 71a and terminating 71b Holophasec 3D Emitter/Exciter 51a and 51b respectively. Referring to Fig. 3, a plurality of Holophasec 3D Emitter/Exciter combinations comprise a multiple array 51 in a parabolic constellation 226 with respect to the PSP multipoints signified here as a dynamically shifting stereoscopic Holophasec 3D Manifold 93. This manifold guides the flow and trajectories of Holophasec 3D Magnetic Moments that are comprised of Wave Matrix aggregations which propagate throughout the Phase Space Place (PSP) channels 130a, 130b. 130c, 130d and 130e, that arrayed along specific overlapping points on a parabolic emitter/exciter constellation that acts as the convex/concave target surface array 53which equals a half radian space 131a. These Holophasec 3D PSP channels are physically, electronically and algorithmically fused with a plurality of Holophasec 3D Oscillators 114 as essential components of the Holophasec 3D Engine (H3DE) 90 as shown in Fig. 3.

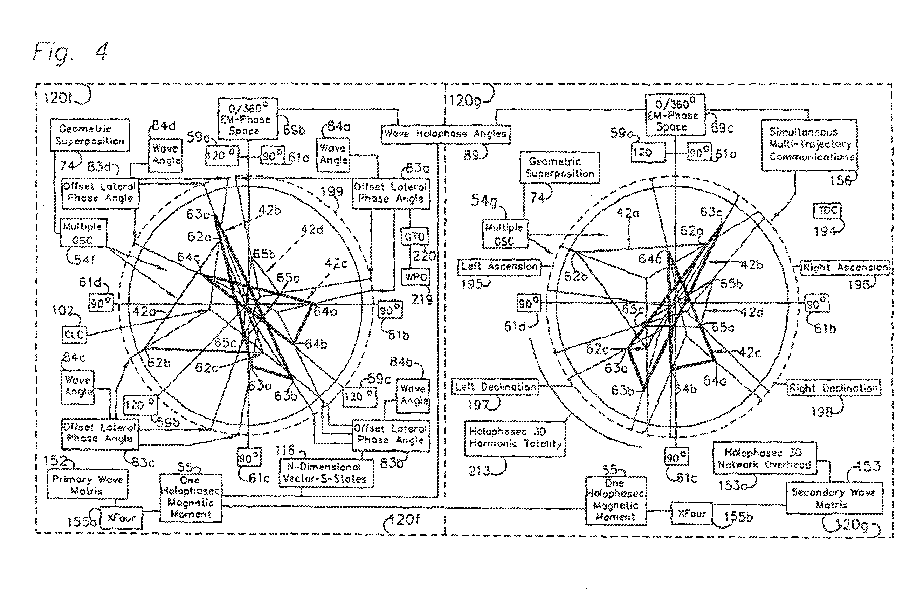

Referring to Fig. 4 this geometric H3DE topology is also defined in terms of Geometric Symbolic Construct (GSC) Symbolic Container (SC) 54f and 54g that comprises the multi-dimensional constellation depicted in the form of a frontal or lateral-cross section view of a Holophasec 3D Channel space that depict a propagation of a concatenated group of Primary 152 Wave Matrix 120f and Secondary 153 Wave Matrix 120g aggregations respectively. This 3D channel space is spatially defined in physical time and space. This 3D channel space is also abstractly defined by selected mathematical equations and algorithms such as 3D fractal, 3D polynomial, and 3D tiling related equations and the like. In this depicted case, the geometric forms are comprised of Fractal-Vector geometry of planes 48 as depicted in Fig. 2, Fig. 4, Fig. 5, and Fig. 6. One such combined spatial and mathematically structured perspective is a point of observation that is optically defined as an angle of view defined here as phase-space-place (PSP) 129. PSP is also a Holophasec 3D sample of this three periodic wave matrix that equals one Holophasec modulated magnetic moment 55. The geometric coding is produced from a 3D mathematical fractal-vector function that codifies the symbolic state bound value. The specialised geometric coding completely and efficiently occupies the inventions multidimensional spatial channel space. The invention provides a revolution in symbolic language expressive coding for technological implementations that produce novel qualitative logical mechanical functions that utilise the complete physical space that exists between a plurality of selected Holophasec 3D emitter/exciter combinations that are placed within the topological structures of any communications network that the inventions means and methods are applied to.

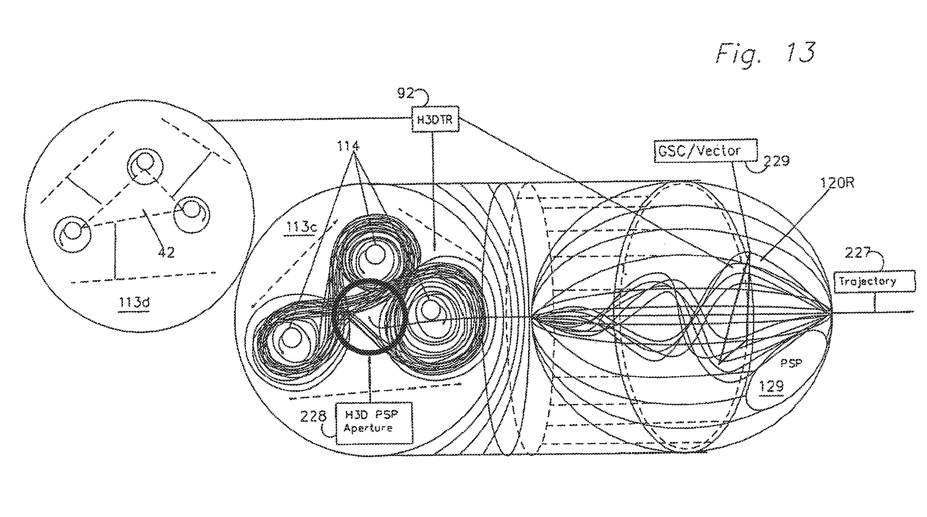

All prior wave propagation constructs that are naturally defined or synthetically produces are based upon the narrow parameters of measured angular momentum of polarlised wave-angles that are viewed from a one-dimensional perspective. All known antenna configurations can only transmit seemingly one-dimensional wave structures. Yet paradoxically all single and combined waves possess three spatial dimensional potential. The invention utilises all possible angles of view of a combined and simultaneous coherently produced Holophasec 3D symbolic constructs and the relationships of matrixes of simultaneously naturally detected and synthetically generated particles and waves angles 84 as depicted in Fig. 2. Referring to Fig. 3 one key novel function of Wave Matrix Mechanics provides alternate means and methods of eliminating detected channel noise, by dynamically shifting 157 the angle of view 119. This processes dynamically alters how an excited target 51b looks at a wave matrix that was originated and propagated from emitter 51a. If one Holophasec 3D Channel emitter/exciter position 130a, 130b, 130c, 130d and 130e detects noise the engines artificial intelligence simply shifts the PSP perspective defined by each channel position. In this way the same symbolic value can be derived by looking at a selected wave matrix at the most noiseless angle of view from any spatial dimension perspective captured by a the half radian space 131a of the parabolic constellation 126. This is not unlike changing camera angle to view another observation point of an object in an optical image such as a hologram. Referring to Fig. 6, the radian space geometric constellation 131 defines the fractal-vector 3D plane coding that produces the three wave matrix at points of origination in time 71a at the emitter 51a and detects and matches the three wave matrix at the exciter 51b and termination point in time and space 71b. The fractal- vector 3D plane coding geometrically defines the same three wave matrix 120e that is illustrated in all disclosed figures, that contain the same three waves depicted in of Fig. 2. In this figure a wave matrix 120 is defined by the essential three- Wave Matrix topology that possesses infinite symbolic variation value. Depicted in Fig. 6 are same three wave matrix 120e defined by three waves 104a, 104b, and 104c. This fundamental Wave Matrix aggregation is encapsulated by a simple geometric radian space constellation 131. A radian space constellation is typically comprised by a plurality of radius segments that define spatial relationships in the familiar form of geometric reference points. A plurality of each segment that creates the basis of a reference point is defined in the language of geometry as radii. A radian space is one of near infinite plurality of geometric constellations that are used by the invention to create a geometric symbolic construct (GSC) envelope as depicted in Fig. 14. Depicted here is a simple geometric constellation that acts as a GSC Geometric Envelop 417 in exactly the same way as the disclosed radian geometric constellation. Shown in this rendering is a simple trigonal shaped geometric constellation that is comprised of a plurality of spatially defined vector spaces 46, 46e, 46f, 46g, and 46h respectively. Enclosed within the spatial dimensional space are three waves 104a, 140b, and 104c that comprise a fundamental Wave Matrix aggregation as heretofore illustrated and described throughout the body of this disclosure. Referring to Fig. 3 and Fig. 13. The invention utilises novel means and methods related to the protocols and procedures of the mapping function of the Holophasec 3D Transform (H3DTr) to the three dimensional 3D symbolic Wave Matrix coding that is derived from unique formations of the Holophasec 3D emitter/exciter configurations. The stereoscopic Holophasec 3D Manifold 93 depicted in Fig. 3 can be configured to fit within the geometric topologies 93a, 93b and 93c shown in Fig. 13. One of the core approaches to developing three dimensional 3D emitter /exciter arrays is to reproduce the three dimensional spatial relationships of wave signature elements and how these unique elements are measured within the spatial dimensions of any applied geometric symbolic constructs (GSC) envelop. Each GSC Envelop is configured to the most efficient topological match that interrelates with the Holophasec 3D Emitter/Exciter array as shown here 51c, 5 Id, and 5 Ie as examples. The proportion of multiple PSP 129 arrangement density/granularity 161a, 161b and 161c is dependent upon how many PSP channel Wave Guides can be placed upon the topological surfaces of the inventions Holophasec 3D Emitter/Exciter 51c, 51b and 5 Ie. Holophasec 3D Exciter/Emitter 51c Geometric Array 280 depicts a configuration that consists of a simple parabolic shaped manifold 93a that is interconnected to a concave 53a and convex 53b surface that could be used to detect sound and or light images that could be designed for a plurality of application specific apparatus. Holophasec Emitter/Exciter 5 Id Geometric Array is configured as a Human Ear Simulation 281. Holophasec 3D Emitter/Exciter array 282 is configured to mimic the optical interrelationships of the essential components of the human eye. The relationship to A GSC Envelop geometric constellation shape, and PSP array density is dependent how much sound or optically related information can be detected from these unique emitter/exciter configurations and remain true to the natural effect of how human perceptions experience sound and optical information input. Holophasec 3D Channel logic can serve any Holophasec 3D Emitter/Exciter configuration 51c, 5 Id, and 5 Ie just to show three of a near infinite plurality of configuration differentiations that closely mimic nature in almost every feasible respect especially in reference to emitter/exciters geometric constellation structure, target surface textures, and other key elements are arrayed with respect to the inventions 3D qualitative mechanical function protocol designs that are dependent upon target array designs. Referring to Fig. 5. Key to understanding Holophasec 3D Emitter/Exciter configurations and Holophasec 3D Channel Logic are the protocols, processes and procedures that relate directly to the Holophasec 3D Transform 92. Fundamental to the basic premise of the Holophasec 3D Transform is the creation of continuous discrete state (CDS) spatial dimensional logic in the form of multiple Geometric Symbolic Constructs (GSC) 54 through converting full wave, half wave and wavelet signatures, inflection, gradient curves and other such unique geometrically defined features to fundamental vector relationships that create an unlimited variations in geometric coordinates that can be used to express any known human written, spoken, and pictorial symbolism in direct interpretative terms without the need to be reduced to binary logic. Any geometric topology 79a can be utilised by the invention to create a geometric envelope 417 that defines the time and space bounds measured here in nanoseconds and nanometer 82. Each Wave Matrix is a multiwave aggregation that is mechanically measured and defined by the dynamic protocol, process and procedure of the Holophasec 3D Transform (H3DTr). The time and space measurement of each Wave Matrix that is comprised of a minimum three-wave aggregation is simultaneously measured in terms of separate discrete symbolic states and logically linked with every other Wave Matrix aggregation that is linked together in geometric coordinates as continuous concatenated topology that encapsulates a complete quantum of three dimensional information. A Geometric Symbolic Construct (GSC) can be defined by one vector. A GSC can be defined by a plurality of vectors and connecting fractal lines 75a, 75b, 75c, 75d, 75e, 75f, and 75g. The GSC 54 depicted here is a geometric envelop 417 that is comprised of four three Wave Matrix aggregations. Each three Wave Matrix aggregation is defined by four fundamental vector spaces 42a, 42b, 42c and 42d. Each vector and fractal line converges at a conjunctive point designated here as vertice points (VP) 87a, 87b, 87c, 87d, 87e, 87f, 87g, 87h and 87i respectively. Each fractal line directly designates a space and time bound that is individually measurable between each origination point, termination point, each vertice and the like.

This novel process defines the three dimensional geometric structure that can directly represent any energetic, mechanical and physical structure in terms of its spatial measurement coordinates that can be disassembled, and propagated through any channel space and reassembled without utilising any intermediate symbolic language such as binary logic and the like. The invention can directly send three spatial dimensional coordinates through channel space. Such 3D coordinates as drafting image 3D coordinates, architectural 3D structural coordinates that can be expressed in pictorial images, mechanical system component part 3D coordinates. The inventions fractal & vector lines used directly as continuous discrete state (CDS) logical coordinates can directly represent image polylines, complex reflections and other such detail. The invention not only enables sending the coordinates of images, but the actual 3D spatial geometric coordinates of the physical object that the image represents though any communications channel space using Holophasec 3D Modulated Magnetic Moment that is coded mechanically via the Holophasec 3D Transform that is comprised of a plurality of Wave Matrix aggregations. The invention provides major breakthrough in terms of providing a more efficient language for computer assisted design (CAD) and computer assisted manufacturing (CAM). A CAD program typically provide dimensioning information and the ability to draw geometric shapes and produce drawings based mostly on lines, arcs, spline curves and 3D surfaces. CAM processes take the CAD drawing to the final stage to produce machining instructions or tool path instructions to make a particular part on a router, milling machine, lathe or nay computer numerically controlled (CNC) machine. The invention dramatically simplifies these important procedures by eliminating the binary logic bottleneck. The invention can take 3D coordinates taken directly from 3D scanning of physical objects. The invention modifies probative scanning and other means of scanning and recording the 3D image of a 3D object. The invention uses the XYZ coordinates that are collected from the object scan process using the Holophasec 3D emitter/exciter array, directly scans the object, transmits and propagates the scanned coordinates and directly transfers the coordinates through any selected host communications network channel space and supportive topology using the inventions Qualitative Mechanical Logic; that expresses Wave Matrix Mechanics via the Holophasec 3D Transform that enables the Holophasec 3D Magnetic Moment. This information is directly received by another Holophasec 3D emitter/exciter and reassembled via the inventions Holophasec 3D CAD/CAM process. Referring to Fig. 5. Any physical object or energetic structure can be measured, coded and defined by the inventions fractal and vector coordinates 79b that can be interpreted in terms of physical 47b and logical 47c three-dimensional perspectives. This complete Geometric Symbolic Construct (54) is defined in terms of space and time 80 from the origination point in time space dimensional reference 71a to the termination in time and space reference 71b, that exists between the originating Holophasec 3D Emitter/Exciter 51a and 51b that represent any communication system transceiver/node/transponder configuration that is operating within the topological channel space of any host telecommunications network. In the complete geometric symbolic construct (GSC) 54 shown in Fig. 5 can represent such 3D coordinates that accurately represent a part of an automotive engine, a crystalline structure such as a protein, coordinates of water vapor cloud in the atmosphere, the retinal structure of the human eye, and or the crystalline structure of chlorophyll in a leaf on a tree. There are no limits as too the benefits the inventions can provide to science, technology and commerce. Between the originating Holophasec 3D Emitter/Exciter 51a and 51b there exists compete three-dimensional spatial structures that are bounded by the upper and lower limits of physical space encapsulated by the each periodic wave. This space is electromagnetically defined, has physical spatial bounds and can be a practical medium for the purposes of containing three-dimensional propagation of all known magnetic fields. These fields include as magnetic flux that can carry Wave Matrix information across a wide range of technological mediums including electrical grid networks as disclosed. Wave Matrix Mechanics introduces the first 3D spatial logic language that directly interprets three-dimensional electromagnetic resonance spatially. The invention purposely forms and propagates entangled waves, and other forms of wave and particle interference. The invention uses superimposed waves structures and imparts the inventions 3D spatial logic into the new symbolic equation that is provided here. Superimposed waves and superimposed geometric structures are now viewed and measured stereoscopically in Holophasec 3D spatial logic and are no longer considered noise in a channel.

Referring to Fig. 4 and Fig. 5. The same Geometric Symbolic Construct (GSC) 54 that is depicted in Fig. 5 is also represented in Fig. 4 as GSC 54f and GSC 54g in two different geometric topological orientations 220a and 220b respectively that are based upon wave phase array orientation (WPO) 219. Each GSC possesses its own top dead centre (TDC) 194 point of view as referenced from each first vertice point (VP) that is codified during the Holophasec 3D Transform process and procedure. By definition TDC establishes three simultaneous XYZ stereoscopic points of view as a minimum multipoint reference fro each three-wave-matrix GSC vector plane structure. Each first vertice point (VP) in this example is designated as 62a, 63a, 64a and 65a respectively. Channel centre 59 is always defined as Wave Matrix-GSC object coordinate centre. In Fig. 5 each fractal line (FL) and connected vector (V) define a time and space measurement. For the purposes of algorithmic continuity the Holophasec 3D Transform (H3DTr) protocol always begins GSC coding has a measurement process from the origination point in time 71 a to the termination point in time 71b key points are designated here as Holophasec 3D Emitter/Exciter arrays 51a and 51b respectively. The invention provides a 3D cascading protocol that introduces a novel means in terms of how a fractal line (FL) and vector space or plane is calculated. Each Holophasec 3D Emitter/Exciter also acts a regenerative nodal point where each Wave Matrix as a Holophasec 3D Modulated Magnetic is regenerated and snapshot mirrored and transported via selected channel space to its next destination on the selected Holophasec 3D Network topology. This topology can represent an entire telecommunications network topology or microchip topology that is populated with a plurality of Holophasec 3D Transistor/Transducer arrays and used in any technological system.

Fractals tend be self-similar and independent of scale. In this same way continuous discrete states (CDS) GSC topologies are also self similar and independent of scale. Self-similar topologies in terms of how fractal mathematics is applied to GSC topology formations, does not necessarily mean that GSC topologies are identically repeatable like many fractal image topologies. The invention uses selected and extrapolated fractal geometry in order reference Wave Matrix Mechanics to the conventional world. The invention essentially provides novel mathematical properties that have simply never been used to redefine 3D digital symbology that possess infinite symbolic state bounds. Thus, zooming in on a fractal would lead you to see the same image repeated over and over. Zooming in on a GSC simply increases symbolic construct clarity has defined by the underpinning substrate of simultaneously generated and propagated wave matrix qualitative structures that define GSC fractal- vector Holophasec 3D structures. Zooming at different set aspect ratios and magnifications also identify specific symbolic values that are designated for specific use in an apparatus. A GSC like a fractal is self-similar and independent of scale. A GSC that is geometrically defined time and space relativistic reference could be the size of three photons, or three positrons, or three quarks or the time space size of the Milky Way Galaxy. Einstein relativistic perceptual governing principles do not matter with respect to the means and methods of the invention. What matters is what the host channel that is selected as the transport medium of a Wave Matrix aggregation is able to resolve the wave formations that are propagated at any point in Phase Space Place (PSP) of the radian geometric envelop that defines the three spatial dimensional value of the multiple fractal-vector GSC.

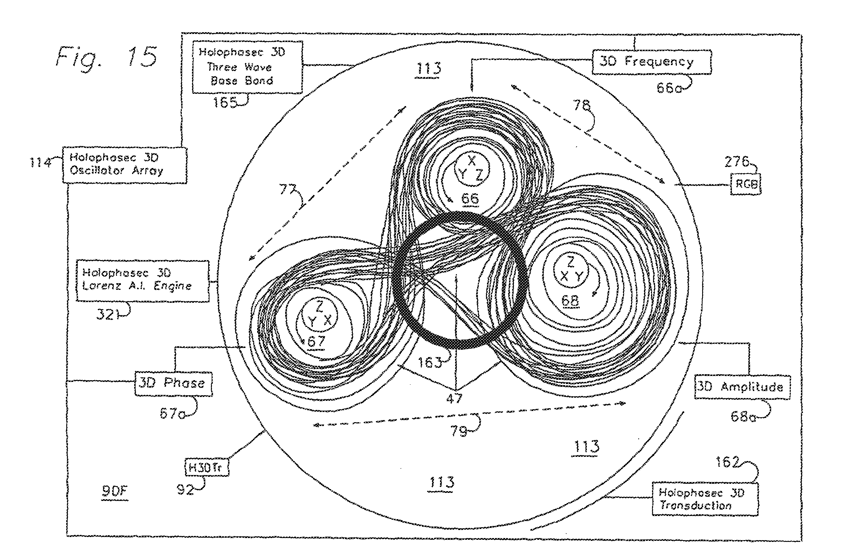

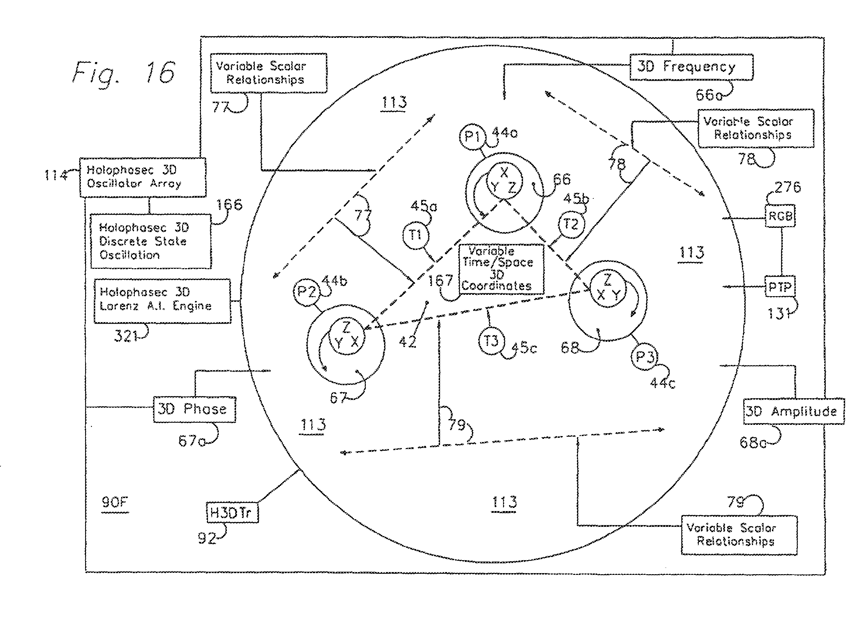

Most fractals are generated from a mathematical equation where the results are iterated, that is the results from the equation are fed back into the equation, and this process is continued until the number grows larger and reaches a certain boundary. A rigorous mathematical definition of fractals was stated by Benoit Mandlebrot, famous for his Mandlebrot set, rediscovering fractals, and naming these mathematical objects as a set for which the Hausdorff Besicovich dimension strictly exceeds the topological dimension. Stepp cites that this definition is not totally satisfactory for it does exclude some sets that are considered fractals. There are many types of fractals such as Sierpinski's triangle, the Kock snowflake, the Peano curve, the Mandlebrot Set, the Lorenz attractor and the Rossler attractor. Fractals have also been shown to describe real world objects that don't follow normal Euclidean geometry. Such examples are mountains, coastlines, and clouds. The foundational 3D electromagnetic effect of the Lorenz and Rossler for example can be harnessed utilising the means and methods of the invention to develop specialised electronic component algorithmic parameters as shown in Fig. 15 and Fig. 16. These components such as the inventions XYZ oscillation means and methods which are essential to the Holophasec 3D oscillator array 114 that manage simultaneous 3D phase, amplitude and frequency of intelligent signals. A Phase-Space-Place (PSP) 129 point of view is designated here as a Wave Matrix Mechanics frame of reference that is can be defined in cube space 96 as shown in Fig. 3 as a means of designated selected symbolic information in terms of a dictionary and or look up table. The invention provides electronic components that reproduce selected Holophasec 3D symbolic state bounds in terms of individual electronic components such as; Holophasec 3D transistors, diodes, triodes, thyristors, rectifiers, capacitors, filters, resistors, XYZ-oscillator arrays and the like. In many cases the invention provides the means and method of alternating current one dimensional electronic components and reconfiguring conventional transistor, diode, thyristors, capacitors, filters, and other such systems to oscillate and propagate Holophase 3D Modulated Magnetic Moments.

The invention provides the fundamental component configurations that are designed to manage the propagation of selected Holophasec 3D Modulated Magnetic Moment intelligent signals that are designed to manage specific 3D harmonic qualitative/quantitative parameters from the n-dimensional Holophasec 3D Transduction 162 process and procedures that produce specialised Holophasec 3D Harmonic transmutational protocols that provide transistor 3D harmonic gating functions and electromagnetic power controls for accurate management of Holophasec 3D Modulated Magnetic Moments within the substrate conductor bounds of integrated circuits and the like. 3D harmonic gating functions do not necessarily turn switch on and switch off Holophasec 3D Modulated Magnetic Moment signals, rather like filters each Holophasec 3D Transistor recognise and regenerate specific Holophasec 3D harmonic relationships such as the case with the inventions Holophasec 3D field effects transistors (FET) that regulate the signal that is input to a specific output that in interconnected to a plurality of electronic components that are arrayed within the physical bounds of a printed circuit board (PCB) assembly topology. These special components are used to produce Holophasec 3D apparatus that are based upon Wave Matrix Mechanics and Qualitative Mechanical Logic that support the managed propagation of 3D dimensional logic. Conventional electromagnetic transduction involves the transfer of electromagnetic power, generated in one system, to another system, in the same or another form. Holophasec 3D Transduction involves the transfer of an intelligent signal that possesses a defined set of three-dimensional 3D harmonic state bounds that is derived from one or a plurality of three wave aggregations that can be applied to support near infinite wave triad combinations. The only limit is the resolution limits that are integral to the host technological-communications topology that the inventions protocols, processes and procedures are applied to. The *harmonics whole* of Holophasec 3D Modulated Magnetic Moment (H3DMM) is multiple of measured superimposed wave, half wave and wavelet: frequency, phase and amplitude derived as discrete dynamically managed electromagnetic state fields that are countable yet conversely the Holophasec 3D information is not primarily dependent solely upon counting wave peaks and troughs. The Harmonic 3D value of a Wave Matrix is based upon defining aggregate assemblages of harmonic state bounds which in turn defines the harmonic qualitative function (HQF) and counting the geometric time and space incremental variations that are defined by geometric coordinances within the physical bounds of a radian sphere that is defined as a radian space geometric constellation as one of near infinite geometric constellations that can be applied to define the symbolic value of a Wave Matrix within certain physical bounds. These physical bounds are 3D spatial dimensional parameters defined first by the time and space differentials that exist between a selected emitter/exciter and the upper and lower limits of selected Wave Matrix signature elements that are governed by host channel space bandwidth and resolution granularity so applied. In turn these parameters define the mathematical parameters which codify and identify the Holophasec 3D Harmonic state that is selected to be produced to in order to perform specific tasks within a selected Wave Matrix Mechanics configured apparatus that is compatible with the target channel space bandwidth of the communications network or microprocessor topology so utilised.

Referring to Fig. 2 and Fig. 5 The Holophasec 3D Transform 92 is explained as successive multiple step process. In Fig 2 here is depicted a single Wave Matrix comprised of three waves 104a, 104b, and 104c respectively which also comprises a Geometric Symbolic Construct (GSC) 54c that contain one Holophasec 3D Modulated Magnetic Moment. A Geometric Symbolic Construct (GSC) is not limited to one three Wave Matrix 120. A Geometric Symbolic Construct (GSC) can be derived from a concatenated plurality of four linearly connected Wave Matrix aggregations represented here by four vectors (V) 42a, 42b, 42c and 42d as shown in Fig. 5 is an example of a continuous discrete state (CDS) 3D symbol stream of n-dimensional information that contains four Holophasec 3D Modulated Magnetic Moments (H3DMM) respectively. While each Wave Matrix is a discrete logic symbolic entity it is geometrically linked together with other Wave Matrix aggregations that creates continuous symbolic coordinates of a particular messaging construct that relates to one of a plurality of application specific purposes. One three-line vector space is equivalent symbolically to one Wave Matrix. Holophasec 3D Transform (H3DTr) counting process involves the simple addition of the time and space coordinates of fractal lines, and vector lines in a combined linear pattern that counts fractal lines and right to left pattern that counts vector lines from the top dead centre (TDC) of the GSC in relation to (1) host channel orientation and (2) Wave Matrix GSC vector orientation with respect to its H3DTr transform process. In Fig. 5, the Matrix Crawler 158 traverses the curvilinear signature shapes of each wave. Each wave peak, wave trough, wave gradient inflection gradient area that is defined here as a unique symbolic signature that reflects a comprehensive coordinate feature that is measured in accord with every other wave signature feature, until received Wave Matrix is mechanically identified as unique Holophasec 3D Modulated Magnetic Moment that relates to application specific symbolic information variable as reference by selected stored dictionaries and or symbol look up tables. Referring to Fig. 2. The process begins at the point of origination 71a, which is always the first vertice point (VP) 87a of the geometric symbolic construct (GSC) topology, which is in the same physical-spatial position as the Holophasec 3D Emitter/Exciter (EE) 51a. The idea of origination in (1) the point in time and space a Wave Matrix is initially originated and propagated through channel space and (2) when a selected Wave Matrix is received by a Holophasec 3D Exciter/Emitter 51a from the origination and propagation point of the another Holophasec 3D Emitter/Exciter 51b that is present and integral to spatially connected Holophasec 3D channel space 70 that comprise a comprehensive communications topology which is also defined as electromagnetic 3D phase space 118 that exists between two or more Holophasec 3D Emitter/Exciter arrays which is further codified by the physical and logical bounds that are set by a practical geometric constellation such as radian space 131 as shown in Fig. 6. Each Holophasec 3D Modulated Magnetic Moment is circumnavigated by one or a plurality of Matrix Crawlers which counts and calculates the stereoscopic 3D fields of electromagnetic perception that each phase-space-place (PSP) sample aperture 129b, 129d and 129 encapsulates in relation to mathematically and perceptually defined harmonic value that is derived from measuring angles of view 122 as depicted in Fig. 2. The idea of angles of view in terms of the invention do not necessarily relates to wave angle interrelationships. The invention defines the idea of angles of view solely with how the Holophasec 3D Engine (H3DE) measures all Wave Matrix harmonic relationships.

The radian space geometric constellation acts as a three dimensional 3D model that codifies and establishes a physical spatial boundary that is also defined in a plurality of mathematical forms. Different mathematical procedures are applied for the implementation of a diverse suite of application specific purposes. The invention provides the means and method of creating a unique symbolic language for each application specific purpose. The invention provides near infinite means and methods that continually define and redefine the unique symbolic state bounds as defines by the accumulative 3D mathematical procedural tasks. These procedural and mathematical tasks that measure the time and space value of each fractal line (FL) that connects to the first vector (V) 42a which geometrically defines one Holophasec 3D Modulated Magnetic Moment 55. Once the first vector is reached than each subsequent Wave Matrix vector 42b, 42c and 42d for example is connected to every other vector in order to create a designated CDS stream of symbolic information.

Referring to Fig. 5, a Matrix Crawler 158, 158a is a dynamic metasymbolic artifact that represents a dynamically re-orientable stereoscopic XYZ point of view (POV) that is utilised to map and measure vector spaces using a plurality of the inventions multi dimensional mathematical procedures that mechanically map the three spatial dimensions of a Holophasec 3D Modulated Magnetic Moment. Each vertice point (VP) 87a, 87b, 87c, 87d, 87e, 87f, 87g, 87h and 87i define each resident XYZ coordinate. Each coordinate is interconnected by a plurality of fractal lines (FL) 75a, 75b, 75c, 75d, 75e, 75f, 75g, and 75h. The spatial area that exists between each vector (V), vector line and fractal line (FL) is designated as vector plane or fractal plane (FP) 76a, 76b, 76c, 76d, 76e, and 76f Each fractal plane (FL) is a spatial coordinate dimension that is geometrically and mathematically defined by mapping wave signature inflections as shown in Fig. 14.

One such procedure is closely associated with multi dimensional tile math procedures that are based upon Penrose tiling methods. These special geometric coordinates create a plurality of novel mathematical form factors that enables a practical means of coding 3D symbolic structures in order to algorithmically interface with conventional communication system apparatus. The Matrix Crawler simply represents the focused accumulative processes that are essential to the means and method of the Holophasec 3D Transform. The inventions essential accumulative processes derive digital counting in an innovative way. Instead of counting the binary symbols such as zeros and ones, the Holophasec 3D Transform counts selected pre¬ defined forms of geometric iterations. These forms can be mathematical tilings that tend to codify symmetrical relationships within the structures of geometric topologies such as the inventions Geometric Symbolic Constructs (GSC) that comprise a novel form of 3D geometric vector topologies that are components of Holophasec 3D Coded logic as defined by the H3DTr transform. In Fig. 5 any Geometric Topology 79a can be applied as a means and method of in channel symbolic coding. The invention uses Fractal/Vector geometric structural coordinance 79b in order to closely associate the revolutionary means and methods to conventional geometric structures and mathematical algorithms. These forms of geometric constellation structuring enable stereoscopic 108 coding that combines the heretofore separate perceptual and procedural constructs of the physical three dimensions 47b and logically defined three dimensions with respect to symbolic coding coordinates. The qualitative and quantitative function of Wave Matrix Mechanics is combined in the dynamic process and procedures of the Holophasec 3D Modulated Magnetic Moment (H3DMM). Each H3DMM can be based upon any time space reference 80 and reside within the pulse interval that exist within the field references of electro-magnetic aspects of all natural particle vector particle- wave physics relationships. Qualitative Mechanical Logic (QML) that harnesses 3D spatial logic and how it is applied to redefining how we see and understand the internal structure of the photon, electron, positron, electron type neutrino pair, muon type neutrino pair, and the composite proton, neutron and muon. The invention redefines how we view the Holophasec 3D constants of these particles have mass and exhibit a magnetic moment that can be defined in terms of the Holophasec 3D Transform (H3DTr). The geometric envelope 417 of this particular Geometric Symbolic Construct (GSC) 54 can relate spatially to any type of structural coordinates. In Fig. 5 this GSC is comprised of four Wave Matrix aggregations that contain a plurality of periodic and non periodic wave formation structures represented here as four vector space 42a, 42b, 42c and 42d respectively.

This four vector GSC can represent the crystalline structure of a DNA segment. This GSC can represent a crystalline structure of any inorganic or organic chemical element. This GSC can represent the metallurgic structure of any material coordinate. This GSC can represent the atomic structure of a plant, a stone, or any other massless and massive particle. The GSC can represent the actual physical, energetic structure that is expressed across a broad spectral relationship of a recorded and propagated visual image that can be defined in terms of an aggregate assemblage of perceptual 3D fields of electromagnetic reference. These perceptual fields can comprise one or a n-dimensional value of Holophasec 3D Modulated Magnetic Moments (H3DMM), no longer does science and technology need to be confined to the sever limits of binary logic, represented by binary zeros and ones respectively. In Fig. 2 the GSC is comprised of nine fractal lines. The three fractal lines that comprise the vector 42 that encompass three wave peaks or troughs that are referenced as aspects if utilising frequency relationships to define a symbolic value. Yet frequency is only one means of measuring the unique symbolic signature of the wave function. In reference to Fig. 5, from the origination point 71a which is the same physical and logical position as the Holophasec 3D Emitter/Exciter 51a the first Vector 42a the fractal lines that define the Vector along with the three fractal lines (FL) 75a, 75b and 75c that connect in terms of 3D space and time coordinates define 3D fractal and vector plane aggregation that is a qualifiable and quantifiable fractal and or polygon structure that possess compete 3D spatial references that is simultaneously and logical structure that offers n-dimensional symbolic state bounds within the electromagnetic structures that comprise the complete totality of a what a Wave Matrix aggregation provides with respect to Holophase 3D qualitative Logic and how the quantum is generated and measured in full three dimensional spatial relationships. Each vector 42a, 42b, 42c and 42d possess unique aggregate amplitude signatures. Wave phase relationships are no longer confined to linear phase relationships. The obsession with maintaining strict orthogonal linear phase relationships in order avoid wave superposition and entanglement is no longer necessary. Conventional phase relationships are replaced with viewing a Wave Matrix in terms of its relative orientation in relation to its top dead centre (TDC) position in relation to the simultaneous position of every other three Wave Matrix aggregation that comprise a Holophasec 3D Modulated Magnetic Moment (H3DMM).

Referring to Fig. 11 and 14 the inventions Matrix Mapping protocol comprises a multiplicity of mapping means that are governed by the geometric topological 3D spatial area of the GSC Geometric Envelop 417. The GSC Geometric Envelop sets the physical parameters that signify the outer bounds of the complete GSC spatial 3D formation. The GSC Geometric Envelop is utilised to set the topological bounds when a Wave Matrix aggregation is propagated across radio channel space, optical channel space, and metallic channel space. For example in Fig. 11 there is depicted 3D kite dart tilings 222a that also geometrically interrelate to Poincare geometric models 428 and Klien geometric models 429 as a means and method of creating a geometric mathematical coding structure. Methods such as aperiodic tiles and periodic tiling functions can be used. These forms of geometric models can be used to specify a symbolic standard that can be used to define human written symbol, mechanical system coordinates, a diffraction pattern of any metallurgic structure, chemical compound structures, any crystalline structure found in nature, atomic particle structures and signatures, magnetic slope analysis and other key material and energetic oscillations structures. The geometric structures of any material known can be propagated directly through any form of channel space with respect to any type of communications topology. The inventions means and methods can be applied to medical forensic analysis, biometric analysis such as retina eyes scan, finger print analysis, accurate voice analysis, facial recognition, and the like. In fact the invention can be applied to any form of information transfer and unique dictionary 3D spatial logic can be applied to create 3D spatial symbolic structures for any application specific purpose. The invention measures wave inflections 211 that comprise measurable gradient curves 212. In order to maintain coding and look up/dictionary consistency the invention provides its own standard approach to mapping a Wave Matrix 120h defined as one Holophasec 3D Magnetic Moment 55.

Referring to Fig. 6 each radius segment is separated equally in terms of time domain and space distance. Each radius is part of the geometric topology that is used to reference the three-dimensional mapping of unique wave signatures not only in terms of wave peak and trough. The invention also measures unique signature relationships of each wave relationship with every other aggregated waves constitute the three dimensional 3D value of these simultaneously propagated wave structures. These selected signature characteristics are geometrically defined in terms of fractal lines, planes and vector spaces that create physical three-dimensional planes of time and space coordinates. A quantity of space and time is a vector which is magnitude and direction-areas covered in terms of time domain, trajectory of object; such as a particle and wave, and its velocity; defined in radio and visible light speed as 'C 'and force or amplitude: The invention defines are geometric spatial relationships that can be measured by increments and intervals of time and space that exists between wave peaks, wave troughs, distinct wave curve gradients, comparison of multiple curve gradients between multiple waves in one or a plurality of three wave matrix, and distinct wave hyperbolic angles that do not necessarily possesses any abstract straight lines. Any combination of unique wave or wavelet signature can be defined by any form of multidimensional geometric expression either in mathematics or natural and synthetically produced object. Geometric Symbolic Constructs (GSC) as Symbolic Containers (SC) reveals near infinite yet predictable topological relationships that can represent any natural or synthetically defined and produced object or energetic object in the known Cosmos.

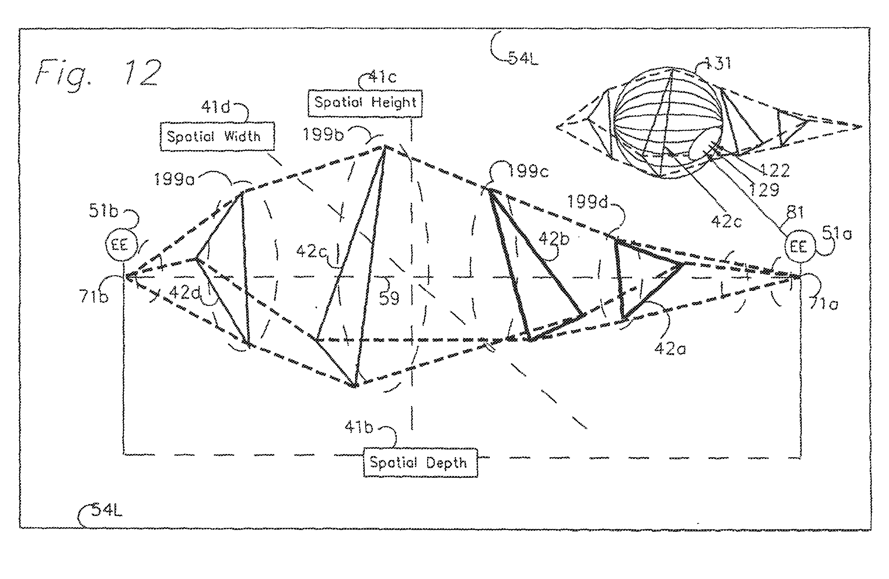

In Fig. 4, Wave Matrix Mechanics produces the Holophasec 3D Magnetic Moment 55 that does not depend solely upon predictable angular momentum of waves as a single entity and considers specific wave trajectories for the purpose of establishing detectable-predictable n-dimensional geometric symbolic values within the n-dimensional focal arrays of any selected geometric structure that defines any wave matrix configuration. A matrix of waves are arranged uniquely in order contain and convey three dimensional symbolic value based upon measured polygon structures and vector states. When a wave matrix is generated and propagated from emission to excitation point the total holophasec harmonic value is integral and sustainable from inception point into the channel and to termination of energy once excitation point has been reached and target point is oscillated and the three-dimensional symbols are referenced. As disclosed a periodic wave or wavelet that is synthetically produced and a particle and wave that occurs and is detectable in nature possess a unique signature. Since James Clerk Maxwell in the 19^{th} Century waves have been defined in terms of frequency, amplitude and linear phase. These three expressions and measurements of waves and particles have value, but the value is limited. In the inventions three-wave matrix, a multidimensional particle can be derived. In Fig. 12 a hyperbolic plane 700a comprises a multi fractal particle that is also represented by the radian space created by the silver ball 700. The hyperbolic plane represents the energy released by the silver ball when struck by the metal rod 706. In this example sound wave trajectory occurs within the hollow sphere in multiple directions or trajectories at once because of the phenomenon of echo and reverberation within the hollow confines of the silver ball 700. Each vertice 62a, 62b, and 62c of the particle of multiple waves is defined by a wave peak, or trough. This image suggests that this particle comprised of hyperbolic geometry is derived from a plurality of waves.

The hyperbolic particle could theoretically be created within the silver ball 700. Once struck with the metal rod 706 its oscillations could be recursive like the energetic flow of another hyperbolic geometric constellation known as the Klien Bottle. Yet how do we measure distinct wave signatures such as peaks, troughs, gradient curves and the like and derive useful symbolic value? The answer is as follows. Referring to Fig. 5., depicted here is the geometric topology of one possible constellation of the novel yet simple Holophasec 3D Transform (H3DTr). The Processes and procedures of the Holophasec 3D Transform can be derived by a plurality of mathematical methods encapsulated in fractal and vector geometry, polygon structures, and other related algorithms and protocols that derive geometric constructs from other processes. The Holophasec 3D Transform may use a myriad of mathematical methods to derive symbolic value. The Holophasec 3D Transform function involves the process of generating discrete wave matrix formations that derive geometric symbolic constructs (GSC) and referencing geometric symbolic constructs (GSC) when wave matrix formations are received, excited and derived from three dimensional geometric symbolic construct (GSC) dictionaries and equivalent data bases. The aim here is to present a simple approach of defining fractal-vector method or polygon method of lines, planes and vertices. There are important geometrical interpretations of equality, addition and scalar multiplication of vectors. In this case a Wave Matrix is simply being mapped in the three dimensions. Fractal methods create vectors and polygon methods create vectors. This drawing is a simple mapped diagram of four three-wave matrixes that are concatenated, i.e., joined in a continuous fractal and or polygon method of adding vectors together to define the three spatial dimensional space occupied by the Wave Matrix. The 12 waves are propagated from right to left from vertice point (VP) 87a to vertice point (VP) 87i. Since the magnitude and direction of fractal and polygon lines specify a vector, two vectors in different locations are considered the same of they have the same magnitude and direction.

For purposes here in almost all cases the speed of an electromagnetic wave regardless of trajectory is defined by the speed of light. In a vacuum, light always travels at a speed of 299,792,458 meters per second, no matter how its speed is measured. So our magnitude measurement here is a constant as symbolized by "C." Speed; that is movement of a wave as it propagates from one point to another in time and physical space is a scalar quantity and informs us the rate at which the wave is propagating. Vector direction in the case is defined by wave trajectory. Therefore regardless of the type of geometric formulations are used fractals and vectors the measurement of the inventions Wave Matrix constellations is easily defined by the Mechanics of the addition of fractal and or polygon lines and planes that create vectors of time and physical space. From this geometric algorithmic procedure a novel means and method of symbolic information coding is provided that alter the way that all channel space is occupied and how discrete logic is interpreted and utilised. In fact in this way the invention provides the means of applying n-dimensional symbolic variation within a three dimensional regenerative discrete state increment in same way digital information is transported through any channel space used in conventional technological systems today.

Referring to Fig. 2, Fig. 5, Fig. 12 and Fig. 22, the physical spatial dimensional space that exists between a Holophasec 3D emitter/exciter 51a that is located at a selected physical transceiver position, and another Holophasec 3D emitter/exciter 51b that is located at a selected physical transceiver position is by definition a third spatial dimensional construct that contains the potential of containing infinite symbolic variation without limitation. The invention also provides a plurality of topological formations that comprise specialised Holophasec 3D emitter/exciter configurations that provide unique application specific implementations across a broad range of technological systems. The invention fully utilises this physical and electromagnetically defined space and provides infinite three-dimensional symbolic state bounds within the energetic; 3D frequency, 3D amplitude and 3D phase relationships of any generated and propagated Wave Matrix that may contain from three to n-infinite periodic wave, wavelet, or half wave aggregations. This physically and electromagnetically defined space can be viewed as a stretched radian geometric constellation 131 as depicted in Fig. 2, Fig. 4, Fig. 6, and Fig. 12 respectively. As heretofore disclosed the invention provides any shaped geometric constellation that sets the model for a plurality of Wave Matrix Holophasec 3D Transform means, methods and Holophasec 3D Emitter/Exciter geometric constellation combinations within the topological constructs of any selected technological system that can be defined as a microcosmic communications network such as a microprocessor and macrocosmic communications network such as the Global System for Mobile (GSM) public land mobile network (PLMN) that operates in nearly every nation of the world. For example a single microprocessor is a communications network. Any means, method and apparatus that contain any technological form of communications means and method can be drastically improved by adapting the inventions means and methods. The invention will provide the fundamental Wave Matrix Mechanics qualitative function that enables Holophasec 3D Modulated Magnetic Moment protocols that produce new Holophasec 3D transistor architectures, wave oscillator designs, and other electronic component configurations that will dramatically simplify how computers, and multimedia recording and playback systems will be designed and utilised by all human users. The invention provides the first practical direct feedback self-adaptive communications system protocol in the history of technology development without the need of utilising highly complex mathematical coding algorithms that require high levels of information processing. Referring to Fig. 2, Fig. 5, Fig. 12 and 22. The physical and electromagnetic space that exists between a selected Holophasec 3D emitter/exciter (EE) 51a and 51b simultaneously creates and defines a selected three-dimensional electromagnetic channel space 199 that can contain infinite symbolic variation, that can be propagated without limitation in terms wave trajectory, relative position orientation and the like. Each Wave Matrix 120 aggregation, in this case defined by a fundamental three wave 104a, 104b, and 104c is simultaneously oscillated and propagated between a physical and time based origination point in time dimension (PnD) 71a and 71b respectively. This selected origination and termination point represents any electromagnetic process that occurs within the communications topology of any technological apparatus that contains an emitter/exciter combination. Such communications event can take between two Holophasec 3D transistor arrays that contain a plurality of Holophasec 3D emitter/exciter-transducers within the substrate array of a Holophasec 3D microprocessor or between a base site transceiver and a user radio transceiver operating as components of the inventions H3DMA network topology. The invention solves one of the fundamental problems that cause current limitations in how technology is defined and designed. The problem is fundamental in terms of how humans perceive what they perceive. All of conventional physics and mathematics is concerned with single inputs of information and multiple out puts of information. In fact quantum mechanics and general relativity is concerned the idea of a singularity, that at the smallest measurement of time and space that it reduces to a singularity.

No matter what not even thought itself can be minimised to a single locality within the neuro network of the human brain. Consider this postulate even the smallest object in the Cosmos is not a singularity for it is a multiplicity. We tend to view all phenomena from what we consider to be one or a single point of view. This is why we design technology the way we do today. We view, define and codify periodic wave constructs solely upon one-dimensional measurement of amplitude, frequency and phase defined by orthogonal relationships of wave angular momentum. The invention introduces radical shift in how we define particle and wave state and provides the means and methods of defining a wave aggregation is one Holophasec 3D harmonic whole in the same way nature produces biological cellular structure within the human body. Each cell communicates with every other cell simultaneously in perpetual feedback across the wide topology of the human metabolic system and nervous system. The Qualitative Mechanical Function of Wave Matrix Mechanics and its Holophasec 3D Modulated Magnetic Moments provide the means and method of accomplishing this task. The invention does not utilise genetic algorithms, cellular automata, swarm algorithms and other such complex mathematical programs that attempt to mimic by loosely approximating nature. The invention directly mimics the natural protocols of all biological systems and provides a quantum leap towards providing simplification to self-adaptive systems that heretofore were considered chaotic and without prediction. Each Holophasec 3D Modulated Magnetic Moment is an mallueble oscillating hologram that is part and parcel of a larger hologram that comprises any form of contextual symbolic value that is embodied as direct Holophasec 3D emitter/ exciter recorded, stored-assembled, disassembled and propagated and assembled and displayed: visual information, sound information, geometric coordinates of CAD/CAM object specifications, text information, any written or spoken human language that contains single and multiple symbols that may range from the earliest form of Western and Eastern hieroglyphics, cuneiform, and music language or any works of art produced to this date. This contextual symbolic value also includes any mathematical language that has ever been created. Fundamental to understanding the Holophasec 3D language of the invention is first considering how humans tend to view and define structures of reality. For example in Fig. 22 there are two similar renderings that define what we may consider a conventional single point of view 149 and a *simultaneous multiple point* of view 150. The idea of *point* here is not to suggest a singularity. Both renderings depict that the same fundamental Geometric Symbolic Construct (GSC) component defined here as a simple vector 42e. One GSC for example can comprise a million vector relationships that are derived from a plurality of periodic wave relationships that are defined without limitation to attitude, inflection, geometric relation of one periodic wave to another, and component parts of one wave to another. One of the most difficult tasks is to define the magnetic moment from all points of view simultaneously. This is exactly what the inventions protocols, processes and procedures provide. This simultaneity is fundamental to understanding the three dimensional expression of Holophasec 3D Modulated Magnetic Moment that is an oscillating periodic 3D field of electromagnetic reality that possesses no limitations of physical, mathematical and or symbolic orientation. The only detection and prediction method needed is a reference of expected harmonic whole that is transmitted from one point to another in a microcosmic and or macrocosmic communication system. In fact all natural propagation of massless and massive waves and particles is by definition naturally Holophasec 3D. There is significant difference between what is considered stereoscopic in a conventional synthetic sense and what is stereoscopic from a natural point of view. When we visually experience a landscape or any other object our brains automatically measure the relative distance in terms of a time and space relationship between all object surfaces, geometric relationships, texture, color, hue, movement cycles and the like. This act of measurement is accomplished with respect to our physical position relative to the object or group of objects being observed. This is the natural foundation of the inventions Holophasec 3D Transform (H3DTr). In this exact same means and method the inventions Holophasec 3D emitter/exciter arrays are designed to measure the physical time space relationships in terms of measuring multiple 3D harmonic geometric relationships that include all aspects of the harmonic spectrum such as color relationships, hue, texture; in fact all physical and energetic characteristics including sound and the like converting these harmonic geometric relationships to Wave Matrix aggregations and propagating these Wave Matrix aggregations that exactly reproduce all physical and energetic characteristics of the object or multiple objects being observed. All known optical apparatus for example detect true natural three- dimensional coordinates of objects. Yet all conventional apparatus such as 3D glasses, virtual reality helmets, 3D displays, 3D projection systems, 3D cameras, 3D video systems, 3D video games and the like only approximate and project the effect of the three dimensional experience. This is why it is necessary to wear 3D glasses and or other apparatus when observing so-called 3D films, photographs and the like. The invention utilises the natural three-dimensional experience that humans and other creatures experience from the combined effect of all the senses, without a quantised sample that simply approximates the reality of the three dimensional Cosmos. The inventions provides the means and methods of enabled a true three dimensional experience in relation to any visual, auditory, olfactory or tactile kinetic experience.

Referring to Fig. 22 and Fig. 6, the act of observation by the naked sensess, and from any type of relevant instrumentality that contains a Holophasec 3D emitter/exciter multiple XYZ 60 point of views can be detected and defined by the Holophasec 3D Transform algorithmic process and procedure. A natural stereoscopic reference point 40 derives any three dimensional perspective that essentially eliminates any negative effects of noise, multipathing, fading and wave and particle signature entanglement and interference that typically limits a conventional one dimensional perspective that dominates all conventional channel logic and associated apparatus and algorithms that are based upon binary logic contained within the substrate layers of associated hardware, firmware and software of selected apparatus. By observing, detecting and measuring a Wave Matrix aggregation within a complete spherical 360° degree perspective simultaneously, the invention captures all of the geometric relationships of a wave and or particle aggregation. For example all conventional stereoscopic apparatus that dates back to the 19^{th} Century to the present with reference to current virtual reality apparatus and related software only approximate three spatial dimensions. Such apparatus as 3D glasses, virtual reality helmets, 3D displays, 3D projection systems, 3D cameras, 3D video systems, 3D video games and the like only approximate and project the effect of the three dimensional experience. The invention utilises the natural three-dimensional experience that humans and other creatures experience from the combined effect of all the senses, without a quantised sample that simply approximates the reality of the three dimensional Cosmos. The invention applies the natural experience to all its Holophasec 3D emitter/exciter configurations. In conjunction with utilising a radian space geometric constellation 131 and n-infinite Phase Space Place (PSP) 129 that provide unique stereoscopic symbolic articulation from each PSP point of view, all unique Wave Matrix aggregation can be stereoscopically measured in terms of its time and space relationship coordinates. In fact any angle of view 119 that is defined as measured PSP 129 can also contain the relative position of a Holophasec 3D Emitter/Exciter 51.

The invention defines the wave signature interrelationship characteristics from a geometric symbolic construct (GSC) 54d magnetic moment that comprised of a wave and or a particle. Spatial height 40a, spatial width 40b and spatial depth can be defined from any point of view 40c. Yet we define conventional magnetic moments from one perspective or one dimension at a time, this is central to symbolic prediction and detection procedures that are used in conventional digital binary logical systems, this is why fundamental to perceptions in conventional quantum mechanics and the like is obsessed with wave and particle angular momentum as the dominate means of defining the orientated quantum of the observation. The phenomena of wave and particle entanglement and interference is not a negative factor in terms of how a Holophasec 3D Magnetic Moment is formed, generated and propagated through any defined channel space. In fact the harmonic totality of a particle, a wave and aggregation of simultaneously propagated waves as structured is an efficient means and method of propagating symbolic information and requires much less system complexity to support is formation and management. Wave Matrix Mechanics is simply a more efficient means of defining and utilising magnetic moment in terms of its Holophasec 3D value. For example the rendering of the GSC vector defines our point of view from a so-called single perspective 149 defines a rather rigid perspective of spatial height 41c, spatial depth 41b and spatial width 4 Id. This perspective dominates all conventional communications technology design thinking. Referring to Fig. 12, in this is rendering the three spatial dimensions are literally defined by spatial height 41c, spatial depth 41b and spatial width 41d of each wave peak or trough that is measured from channel centre 59 the overall channel 199a, 199b, 199c, and 199d circumference which changes dynamically due to Holophasec 3D feedback and responses with reference to primary and secondary Wave Matrix propagation. Referring to Fig. 10 primary Wave Matrix 152, 152a, 152b and a reflected Secondary Wave Matrix 153, 153a, 153b is one of the core protocol formations of Holophasec 3D Conjugate Symbolic Fusion (H3DCSF). A Primary Wave Matrix and Secondary Wave Matrix possess the same three-dimensional symbolic value. The Holophasec 3D Channel 70d is a model that depicts a Primary Wave Matrix 152a originating from.

Referring to Fig. 5. each three-wave matrix is defined by each vector 42a, 42b, 42c and 42d and each measured three dimensional fractal plane (FP) 76a, 76b, 76c, 76d, 76e and 76f. The fractal planes represent the connected the three dimensional geometric forms that are created between reach vector (V) 42a, 42b, 42c, and 42d that designate wave peaks which are defined three dimensionally by each XYZ vertice point (VP) 87a, 87b, 87c, 87d, 87e, 87f, 87g, 87h, and 87i. Each vector in connection with each fractal plat defines the basic geometry of each Geometric Symbolic Construct (GSC) 54. Therefore a complete GSC is constructed from the aggregate assemblage of fractal lines (FL) 75a, 75b, 75c, 75d, 75e, 75f, and 75g the vectors (V). This is why a Wave Matrix can easily be defined by the mechanical addition and multiplication of Fractal lines (FL), the overall area of fractal planes (FP) and vectors (V) respectively. Included in this geometric diagram is an icon that represents a mathematical tool defined here as a Matrix Mapper 158.

Referring to Fig. 2, and Fig. 13 the Geometric Symbolic Construct (GSC) 54L in Fig. 13 reflects and represents four Wave Matrix aggregations that comprise 12 periodic waves, layed out in a concatenated sequential topology. This pattern is specified here in order to demonstrate the continuous discrete state (CDS) fundamentals of the Wave Matrix Mechanics Holophasec 3D Modulated Magnetic Moment protocol. In most cases one Wave Matrix will contain a plurality of three wave combinations that create one multiple wave modulated magnetic moment as shown in Fig. 6. Here one 12 wave matrix 120c, 120d and 120e defines one Holophasec 3D Modulated Magnetic Moment in three different visual magnifications. These 12 waves four discrete three wave matrix fields that simultaneous possess and propagate continuous fractal-vector and or polygon-vector three dimensional symbolic flow of information The Geometric Symbolic Construct (GSC) 54c that contains one three- wave matrix 120 is propagated between nodal points in time and space defined here as the emitter/exciter (EE) 51a and emitter/exciter 51b, which also represent the origination in time 71a and termination in time 71b of the Wave Matrix event.

Referring to Fig. 6 a 12 wave matrix 120c and 120e can be generated and propagated by multiple wave oscillators either in concatenated continuous discrete state (CDS) three wave increments or in one simultaneous 12 wave matrix as shown in Fig. 6. This important technical aspect is based upon whether or not a communications network topology and associated channel space and antenna array possess the protocol-bandwidth capability that allows for a wave matrix that contains 12 simultaneously generated, emitted and propagated waves. In some cases older digital networks will require that a Wave Matrix aggregation is disassembled at emission origination point and propagated across a selected channel space and reassembled at the excitation termination point.

In Fig. 4 the same 12 wave matrix is depicted as a perceptual field that is viewed across the channel. This point of view is designated simply by the observer who could be anyone viewing this drawing as imagining himself as an origination or termination point in time and space. What is illustrated is a geometric pattern that relates to the geometric structures of a kaleidoscope. Each vector 42a, 42b, 42c and 42d illustrated in Fig. 5 and Fig. 12 is the same geometric vectors depicted in Fig. 4 defined by the three wave vectors with vertice points (VP) 62a, 62b, 62c, 63a, 63b, 63c, 64a, 64b, 64c, 65a, 65b, and 65c. Key to the means and methods of Wave Matrix Mechanics is how each wave matrix is defined, generated and propagated through any channel space.

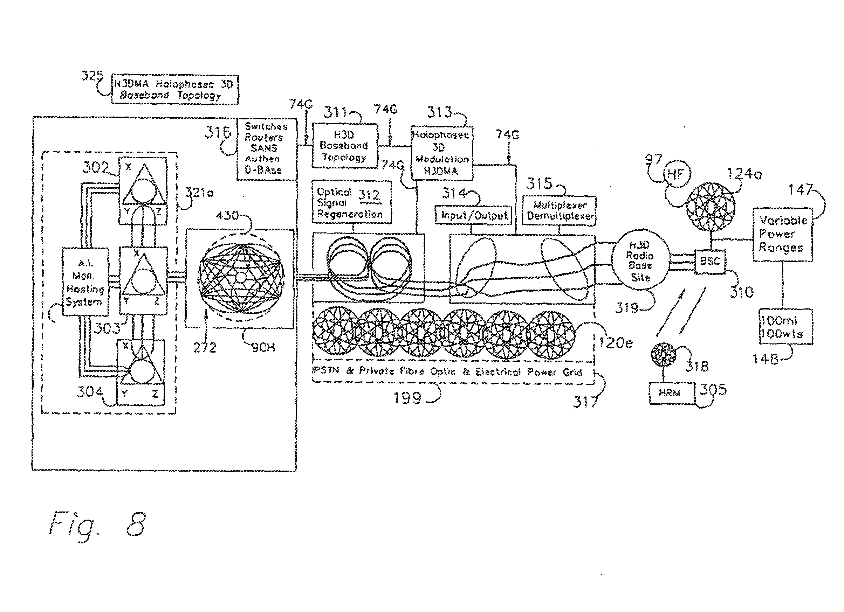

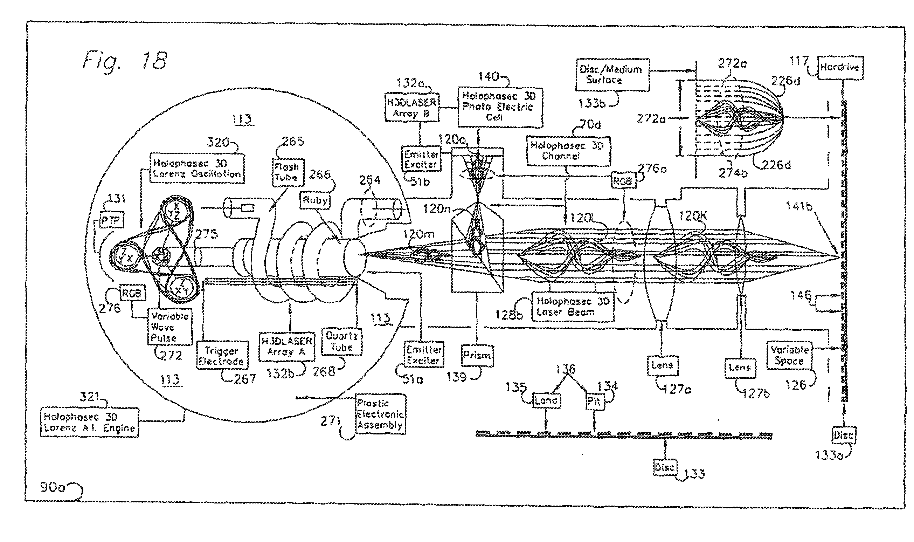

Referring to Fig. 3. Depicted in this rendering is a Holophasec 3D Magnetic Moment Transceiver (H3DMMtr) 90. The H3DMMtr is also illustrated in various expressions in Fig. 8, Fig. 9, Fig. 10. Fig. 15, Fig. 16, Fig. 17 and Fig. 18 respectively. In Fig. 3 the transceiver component protocols are specifying a generic configuration that is comprised of a combined emitter and exciter 51 and other key components such as the Holophasec 3D Laser Array 132 that is also depicted Fig 17 and Fig. 18 respectively. In Fig. 3 this fundamental configuration expresses the basic application for any communications or any other information processing system that it is applied to such as microprocessor design, transponder design, any type electronics component that manages any type of analogue or digital information. The direct applications also include any type of communications transceiver, transponder or any type of communications network node. The H3dMMtr can be applied to any conventional channel structure such as carrier analogue baseband, any digital modulation scheme, and any digital multiple access schemes. Direct applications include any analogue and or digital radio communications channels, fibre optic communications channels, metallic communications channels, and electrical power grid communication network topologies. Contained within this transceiver apparatus is a plurality of wave and wavelet oscillator arrays 114. Each oscillator 114a, 114b, 114b, 114c, 114d, 114e, 114f, 114g and 114h is aggregated in a scalar array with respect to a printed circuit board 113 that can also be configured as a plastic electronics assembly 271. Each oscillator in fact generates three wave or wavelet combinations simultaneously. Therefore these oscillator arrays can be defined in mathematical geometry as XYZ that expresses n-dimensional wave or wavelet combinations. Each oscillator array is designed to generate and propagate a plurality of periodic waves and or wavelet into the burst chamber 151 enables 3D burst generation 151a of a three or more simultaneous wave matrix aggregation that is the particle vector physics of the Holophasec 3D Magnetic Moment 55. The Holophasec 3D Transceiver 90 is both a Wave Matrix receiver 137 and transmitter 138. Within the geometric structures of the burst chamber 151 are the means and methods of generating any combination of wave states that fit within the parameters of any time and space domain 49c that can be produced in the three spatial dimensions. Each emitter/exciter 51 enables n-dimensional XYZ 3D combinations of angles of view 119 that define each observational phase-space-place (PSP) 129 as shown in Fig. 2. When a Wave Matrix Magnetic moment is propagated and detected at the excitation point it simply does not matter what angle value the any one wave obtains singularly, yet it is the aggregate interrelationship of the three wave that derive three dimensional symbol value. Each observation point, also known here as XYZ 62a, 62b, and 62c angle of view 119 derives the PSP 129 that defines the symbolic value for each Holophasec 3D symbolic message which in turn defines each Holophasec 3D channel space 70. Each PSP channel defines the electromagnetic channel space that comprises all communications channel. All electromagnetic channel space is comprised of the three spatial dimensions, which produces n-dimensional symbolic states that are derived from n-dimensional XYZ combinations that are geometrically inherent to the nature of three wave matrix aggregations respectively. Each Wave Matrix wave aggregation is by definition Holophasec 3D, not only in how the invention generates and propagates symbolic information from an emitter to an exciter in one defined physical or logical channel space but how it can enable the generation and propagation of one or a plurality of wave matrix from both ends, i.e. two or more points of electromagnetic emission in reference to the trajectory points in one defined channel space, occupying the same physical or logical space simultaneously. By utilising full three spatial dimensions the ability to propagate multiple wave states without introducing additional noise is utterly possible.

Referring to Fig. 3., each Holophasec 3D Magnetic Moment produces full electromagnetic spectrum three-dimensional feedback 56 that is defined here as a secondary Wave Matrix propagation. Any defined Wave Matrix that is propagated can represent a primary and or secondary Wave Matrix within the mechanical functional constructs of a Holophasec 3D Modulated Magnetic Moment. This three dimensional feedback is sampled by the Holophasec 3D emitter/exciter 51 in order to define how to energetically and geometrically assemble through electro-mechanical means, the next Holophasec 3D magnetic moment 55 to transmitted through any electromagnetic communications channel regardless of the particular medium. The channel medium can be a radio channel, a fibre optic channel, a free space Holophasec 3D laser channel, a metallic electrical grid channel and the like. There are simply no limitations to the means and methods of the technology and how it is applied.

Referring to Fig. 2 and Fig. 4, the round radian shape is the geometric constellation used here for the sake of illustration because a sphere tends to be the easiest to use as a model in the context of what is being disclosed here. However the invention is not limited by the use of any one geometric constellation shape or topological formation. In fact each application of Wave Matrix Mechanics and its Holophasec 3D Magnetic Moment can utilise a different emitter and exciter configuration. One application that relates to recording and generating true spatial three- dimensional images will require an exciter and an emitter that is physically shaped in a specific three-dimensional geometric constellation. The important aspect here that the essential interrelationship of each wave with every other wave is a selected Wave Matrix Magnetic Holophasec 3D Magnetic Moment that codifies is detected and identified because of its total three-dimensional harmonic state, regardless of aggregate angular momentum trajectory at any point of the emission/excitation cycle. In Fig. 4, the 12 Wave Matrix 120f can be an instantaneous configuration of two three Wave Matrix combinations designated here by vector 42a and vector 42b can be generated and propagated from emitter/exciter 51b and two three Wave Matrix combinations designated here by vector 42 c and vector 42d can be simultaneous propagated from emitter/exciter 51 as shown in Fig. 2. In fact the opposing exciters can detect the Wave Matrix combinations from each point of emission simultaneously. This is made possible due in fact to the three spatial dimensional electromagnetic creation of the Wave Matrix Holophasec 3D Magnetic Moment channel as defined from a lateral three dimensional point of view 120f that defines one of infinite points of Holophasec 3D points of view or Phase-Space-Place (PSP). Referring to Fig. 4, such geometric relative wave constructs semantical constructs such as off lateral phase angle 83a, 83b, 83c and 83d are just another way of expression and codifying one many ways of defining Holophasec 3D Magnetic Moment 55 electromagnetic 3d Phase Space 70a and 70b which can produce infinite symbolic value from infinite points of view or points of observation. From the point of view the defining points degress of the reference of zero degrees 0° to three hundred sixty degress 360° 70c is simply a reference point within the geometric phase relationship with respect to the particular Phase- Space-Place (PSP) 129 angle of view 84a, 84b, 84c and 84d. Each offset lateral phase angle 83a, 83b, 83c, and 83d, which in this depiction equal 12 different wave or wavelet peak or trough point of reference. These are arbitrary reference points well illustrated here by the radian space 131 topology expressed in Wave Matrix 120g.

The holophasec 3D magnetic moment is not effected by any of the vagaries of natural or synthetically produces noise, multipathing, fading, and the like that plagues all conventional radio and other related electromagnetic based technologies. The technology challenges Shannon's channel entropy theory and the calculations that support his findings. Each radius segment 86a, 86b, 86c, 86d, 86e, 86f, 86g, 86h, 86i, 86j, 86k are separated equally in terms of time and space. The time and space difference that exists between the Origination point 71a in time and space or life cycle of a periodic wave and the Termination point 71b in time and space defines the longest wave length of anyone of the three or more periodic waves in terms of distance or ***depth of channel field-focal plane*** that can be measured from origination to termination point of any of the depicted period waves. This depth of channel field is defined by the observer's point of view or perceptual presence in Phase-Space-Place (PSP) 129 in terms of what part of the Wave Matrix aggregation the observer sees and utilises at any point simultaneity in terms of space and time. For example one user utilises the full three spatial dimensions provided from one three-wave matrix. Four users may utilise one 12-wave matrix 120c and 120e as shown in Fig. 6. Eight users can utilise one 24-wave matrix 120d. The limits to the means and methods of how the host communications network topology is designed and the how each emitter and exciter is designed to accommodate the Holophase 3D Magnetic Moment of Wave Matrix Mechanics.

Wave Matrix Mechanics utilises the full distinct Holophasec 3D signature potential that each wave creates in terms of vector; direction of magnitude, i.e., its trajectory. A Wave Matrix that contains three or more waves has n-dimensional variations of depth of channel field when the geometric trajectory that can be defined from wave peak to wave peak, wave trough to wave trough, wave hyperbolic curve gradient to wave hyperbolic curve and measured slope gradient, and any other unique predictable wave a or wavelet signature or state vector that can create a geometric symbolic construct (GSC) that defines any point of simultaneous space and time from any point of observation 49; angle of view as defined by any defined Phase-Space-Place (PSP) 129 as shown in Fig. 2., and Fig 4 respectively. In Fig. 6 there is a plurality of Holophasec 3D samples designated as PSP samples 129b, 129d, 130a and 130b. From an three-spatial dimensional particle-vector physics point of view a Holophasec 3D Sample is defined as a designated physical area with time and space parameters. These time and space parameters are defined as Phase-Space-Place (PSP). Each PSP sample if an aperture of perception 122a. For example spherical or radian space geometric constellation 131 contains eight PSP Holophasec 3D samples 129b and 129d. Each PSP is defined by its relative position with respect to the radian space 131 by its physical position in terms of coordinates defined by degrees. Just like a geographical representation of longitude and latitude coordinates each PSP has a relative position to the radian space centre 131b of the Wave Matrix 120c, 120d and 120e. Each PSP is designated with a specific coordinates that relates to plus+ and minus- degress from zero 0. As Such: PSP +001/+002, PSP-002/-003, PSP-004/-005, PSP+003/+004, PSP-007/-009, PSP-01 1/-012, and PSP+008/+009 respectively.

Referring to Fig.4 In this case all 12 waves possess equal length in nanometers and have a periodic time value defined in nanoseconds, yet each wave peak, trough, wave gradient slope and the like creates a unique symbolic signature. Combined all 12 waves create a unique three spatial dimensional topology. However in most cases each wave will possess its own amplitude value, frequency and linear phase value. The inventions algorithmic procedures allow for complete dynamic management simultaneous control of wave and wavelet amplitude, frequency and phase; this includes any trajectory of linear phase, lateral or cross phase between wave peaks, troughs and other signatures and any other differentiation in terms of point of observation-propagation; angle of view-PSP 129.

Lateral or offset phase separation between wave peaks that are illustrated here in a complete 0/360° degree circle 70c that represents the cross section of a channel created by geometrically defined electromagnetic phase space. In theory there could be near infinite radius segments applied to the creation of a radian. However for purposes here illustrating simplicity is preferred. The centre of the physical channel (CPC) 85a and 85b also is defined by the physical spatial distance and focal distance that exists between the emitter/exciter point 51a and 51b as shown in Fig 2., which are synonymous with origination and termination points of the aggregate simultaneous three wave oscillation cycle.

In Fig. 4 the electromagnetic 3D phase space 70a is geometrically defined by the radian sphere, the 12 contained periodic waves define a single Holophasec 3D modulated magnetic moment 55. In this case one 12-wave matrix creates multiple geometric symbolic constructs (GSC) 54f and 54G. The scope of Wave Matrix Mechanics constructs that are derived from music theory are effectively reduced to, and expressed in, concrete terms that actually point to a given increment or 'snap shot' discrete quanta of generated three-dimensional sound. This increment is a "sound signature construct, that has a set of values expressed in combinations of pitch, timbre, amplitude, beat, sustain, wave depth of field and other related aspects that can expressed in three dimensional holophasec sound wave constructs known as fundamentals, first harmonics, second harmonics and the like. The structures of fundamentals, first harmonics, second harmonics and the like are simply single and simultaneously generated multiple sound periodic wave functions that possess inherent three dimensional spatial-value as measured and defined by any Holophasec 3D Magnetic Moment (H3DMM).

Referring to Fig. 2, here is depicted a wave matrix 120a that is comprised of three simultaneously generated and propagated periodic waves 104a, 104b, and 104c respectively. A wave matrix is comprised of three simultaneously generated and propagated periodic waves 104a, 104b, and 104c rendered here in dashed lines in order to distinguish these three from the other nine waves that comprise this particular wave matrix 120 that occupies the three physical-spatial dimensions that is defined by space-distance in all directions simultaneously and the time it takes to occupy and measure the space traversed by multiple wave trajectory. The inventions wave matrix is always defined by three or more waves that create a single holophasec 3D magnetic moment (H3DMM) 55, that also create the Wave Matrix Mechanics 3D channel which is defined by what is usually associated with optical phenomenon known in the art as focal range-focal depth of field and the like. Focal depth of field and the establishment of focal planes exist within the n-dimensional geometric structures of a wave matrix magnetic moment; also known as a Holophasec 3D Magnetic Moment (H3DMM).

One key construct that is introduced here is the process of applying optical technology related phenomenon to the three dimensional structures of communication channels and the wave, wavelet and particle information that is propagated through such channels. The concept of 'depth of field,' 'focal plane,' 'focal depth,' and the like can be directly applied to the task of explaining the constructs, protocols, processes and procedures of Wave Matrix Mechanics. For example the concept of depth of field is typically defined as the distance in front of and behind a subject being photographed in which detail of the object remains in acceptable focus. When an object goes out of focus, or is subject to the optical phenomenon known as the "circle of confusion." The idea surrounding "curvature of field" is also compelling. This idea examines an off axis lens aberration that causes light rays to come to a focus at different points, resulting in a curved focal plan. Because of this type of aberration, the image loses sharpness neat the outer edges of the perceptual plane. In very similar way when we design communication channel structures we are limited by the perceptual boundaries we have placed upon our mediums of exchange of ideas, i.e., our mathematical symbols that provide some means of qualitative and quantitative relationship to what we perceive as cognitive phenomenon. In the same way an image loses sharpness near the outer edges of the film or perceptual boundaries, the limits of our calculations introduce noise into the protocol equations that define the current means and method of defining channel logic; relativistic physics, quantum mechanics and binary logic. The idea that reality can be reduced to a singularity is arrogance in the extreme.

The invention, Wave Matrix Mechanic is derived from the foundations of Qualitative Mechanical Logic (QML). QML posits that it is the quality of information that we create and propagate that defines our systems. In that because of how we currently perceive and project our mathematical conclusions we severely limit what we create in our technological systems. The invention changes how we perceive any sort of technological system, especially the communications channel and how we perceive light designated as the visible spectrum and the light spectrum that we do not see that is commonly called the radio spectrum. Considering the fundamentals of this idea, in Fig. 2, observe the distance between exciter/emitter (EE) 51a and exciter/emitter (EE) 51b. A single wave or multiple waves that occupy the same Holophasec 3D space at the same time is an electromagnetic object in space and time. In this case each of the three waves possesses its own unique signature and trajectory within the focal range that exists between an emitter and exciter. Also it is quite possible to introduce as many simultaneously generated/oscillated waves into any given increment of space and time, designated here as Holophasec 3D space until the system reference or medium of reference known as human perceptions and our system of instrumentality breaks down and the Wave Matrix Mechanical states loses its focus/definition due to the aberration caused by introduced noise.

The idea of 'set' always restricts our system coding because of our current obsession with the idea of duality and polarity. In terms of digital forms of communications binary logic, this system of perception uses two wave state forms that reference a zero or a one. Referring to fig. 2, one three wave matrix 120 defines a triple oscillation in time and space with respect to its harmonic totality. This is not unlike a second harmonic codified in the language of music when three tones are generated during the attack, sustain, decay of waves that generate the qualitative parameters of sound waves in a musical composition. A Wave Matrix magnetic moment takes up space that can be geometrically mapped such as 360° degree radian space 69a in three or more dimensions, and covers measured distance in multiple directions when designating the measured fractal plane of three wave peaks 62a, 62b, and 62c as the Wave Matrix centre 69b. Radian space 69a is but one of near infinite Euclidian, Classical, Hyperbolic, or any other constructed form of geometric constellation shapes that cane be used by the invention harness, then codify and define Wave Matrix geometric constellations that are based upon fractal geometry, fractal and vector multidimensional algorithms, polygon structures and any other geometric means of generating, detecting and codifying the continuous discrete state (CDS) multidimensional wave structures of each discrete Wave Matrix.

Referring to Fig. 2, and Fig. 3 in this example of a Wave Matrix we can see this rendering as a frozen three dimensional '3D wave matrix multidimensional structure 133 in channel space and time. We see that the origination of the wave matrix in time 'Pl' 71a begins at initial vertice point (VP) 87 that initiates the formation of this three wave matrix 120 in accord with the three dimensional coordinates of the inventions geometric symbolic constructs (GSC) symbolic container (SC) 54 holophasec 3D fractal-vector structures 145. The three spatial dimensional reference is used to derive and define a new channel means and method by using full and half wave 110, 110ac states, that create utterly efficient and flexible means of defining discrete 3D logic.

This same origination point is the exciter/emitter point 51a where this three wave 104a, 104b, and 104c matrix 120 is generated and propagated between the origination point 71a and the termination point 71b in channel time and space 108. In this case as is with all applied cases of a Wave Matrix holophasec structures, three periodic waves always produce nine vector or fractal lines (FL) 75, 75h, 75i, 75j, and 75k; five vertice or fractal junctures (VP) 87, 87j, 87k, 871, and 87m and seven fractal planes (FP) 76 represented as one graphic symbol as a minimum three dimensional structure the enables n-dimensional polygon structure variations. Referring to Fig. 5, depicted here is the fundamental geometric symbolic constructs (GSC) symbolic container (SC) 54d holophasec 3D fractal- vector structure 145 that is derived from the dynamic protocols, processes and procedures of the Holophasec 3D Transform-H3DTr 92. Also shown here are all fractal plane (FP) 76a, 76b, 76c, 76d, 76e, and 76f respectively.

Referring to Fig. 2, Wave Matrix Holophasec 3D Transform produces n-dimensional fractal/vector line, fractal plane variations and symbolic variables 116 without any generated symbolic limitation. Each holophasec 3D magnetic moment can be defined and measured in 360° degrees of radian phase space 69. All of this is possible because Qualitative Mechanical Logic views the channel as electromagnetic 3D phase space 70 which is a harmonic phase space (HPS) 107 that possesses the potential to propagate any format or language of continuous discrete state (CDS) wave matrix symbolic information. As such each geometric vertice point (VP) expresses infinite three-dimensional potential of 3D mathematical permutations in XYZ1 62a, XYZ2 62b, and XYZ3 62c respectively. A Wave Matrix does not depend upon the idea of singular wave angular momentum to predict or detect and identify the three dimensional or n-dimensional symbolic value of each holophasec 3D magnetic moment (H3DMM). A Wave Matrix can be derived simply by generating simultaneous half wave 110, 110a states in order to define Holophasec 3D symbolic references.

Referring to Fig. 2 This Wave Matrix 120 basic fractal-vector and or polygon-vector geometry 145 relates to all crystalline structures expressed in all natural and synthetically produced atomic structures in matter and energy. Yet when we look upon any atomic structure we see interrelationships of curved structures that overlap other curved structures that comprise what we see. Wave Matrix Mechanics provides the fundamental means of generating and propagating holophasec 3D magnetic moments that are based upon three dimensional or n-dimensional logical expressions. No longer does discrete state information have to be confined to the limitations of one and two-dimensional binary logic. The invention provides three dimensional mathematical equations that express the n-dimensional coordinates of tile mathematics, hyperbolic geometry, organic and in organic chemical structures, metallurgy structures, material manufacturing coordinates, computer rendered polygon structures of mathematically scaled yet relatvistically accurate of computer assisted drawing (CAD) that can be applied directly to the manufacture of everything from integrated circuits to baby bottles.

Referring to Fig. 2, the time and space or phase-space-place (PSP) 129 that exists between vertice point (VP) 87 and 87k can be defined in all three spatial dimensions. The space that exists between VP 87 and VP 87K can be measured in terms of its spatial depth, width, and height with infinite-multiple points of observation; origination-termination points of trajectory of, full wave, half wave and wavelet state propagation. All symbolic 3D coding can be derived from generating half waves HOa to create Holophasec 3D snapshots of fractal-vector and or polygon vector discrete symbolic coding without the limitations of binary logic. Contained within these spatial dimensions is a Wave Matrix 120 that can express; generate and propagate n-dimensional symbolic states through any electromagnetic channel space without any limitation symbolic expression regardless of any desired selected symbol format. The time and distance that exists between vertice point (VP) 87j and (VP) 87k respectively as shown in Fig. 5, can be expressed in conventional time increments such as nanoseconds and conventional space measuring increments such as nanometers. For example a common microprocessor takes two to four nanoseconds to complete one instruction. The physical distance between vertice point (VP) 87j and (VP) 87L can be quantified and qualified in terms of all three spatial dimensions. The distance may be two nanometres in physical space, and the time it takes to travel it may consume -1*10" 17S. For example if this Wave Matrix 120 contains three wave symbols that together in one Wave Matrix express abstract, contextual, and other symbolic values such as mathematical coordinate meaning, than the symbol(s) exists and are definable in all three spatial dimensions as do letters printed on a page of paper or generated from a computer screen. The Holophasec 3D Transform (H3DTr) can be related to a three dimensional mathematical tilling such as quasi-periodic tile-assembly procedure. Tiles of various shapes are derived from the unique signature of each wave and the qualitative and quantitative geometric relationships so derived from the mapping transform procedure that is depicted here. One full wave, half wave or wavelet is really is an assemblage of electromagnetic curves that possesses unique gradient slopes, peaks, ascending and descending spirals and the like. Referring to Fig. 5, and Fig. 11. Another way of coding full waves, half waves and wavelets that comprise a Wave Matrix is by mapping the space between the waves with geometric tiles which is a form of plane geometry along with fractal and polygon vector related geometry. Johannes Kepler was one of the earliest scientists to define what we know today as tile math, his work inspired the physicist and mathematician Roger Penrose who helped further define tiling in two forms periodic and aperiodic. A tiling plane is *periodic* if it admits translations in at least two non-parallel directions. The three dimensional spatial coding of the inventions Wave Matrix requires that we examine to new ways of using existing geometric functions that can be adapted to developing a new channel coding language. Using tiling coordinates as a means of developing symbolic look up tables and 3D symbol dictionaries as part of memory constituency of a communication apparatus configuration is key to developing new ways of sending and defining massive symbolic information through channel space from excitation/emission to another excitation/emission point. An important component of Wave Matrix Mechanics (WMM) and Qualitative Mechanical Logic (QML) is to view processes in nature as a multipoint to multipoint protocol, process and procedure. In that the point of view of the perceiver is merely a central convergence of phenomenon. A Wave Matrix emitter is also an exciter, conversely and exciter is also an emitter. For example an emitter that is placed on one end of a channel can also be excited by the feedback of the exciter on the other side of the channel due to the inherent reflection of all electromagnetic phenomenon of the three dimensional Wave Matrix when it is detected by the exciter upon arrival.

The Wave Matrix Mechanics emitter 51a and 51b is also exciter for it "sees" all facets of the multi wave excitation like viewing diamond splatter when multiple point so light is propagated and shown on the surface of all facets of the diamond lattice matrix of the multi waves geometric constellation. This is an endemic process in all cognition by human eye componentry, occipital nerves and axon, synapse, and neurons that comprise the human neuronet. Be it natural or synthetic all energy as it propagates is always reflective. Wave Matrix Mechanics posits: (1) If we view the channel as comprised of three spatial dimensions height, width and depth, (2) if we view height as an aggregate measurement of frequency and amplitude, and width as defined by the spiral circumference of each wave, viewing and measuring the wave across or laterally from various angles of view, plus the overall width of all waves in a selected wave matrix measured from logical and physical channel centre couple with the bandwidth bound of the channel defining its outer bound or upper performance limits we have a way of measuring three dimensional height from infinite multipoints of view define in this disclosure as phase-space-place (PSP). (4) Three dimensional channel depth; also defined here as channel depth of field; the channels focal plane and the focal distance that exists between an emitter and exciter is how the invention defines the dimension of depth in terms of all three spatial dimensions. Using geometric tiles as means of measuring the vector space between unique wave signature elements is yet another direct way of coding information that is emitted, propagated and excited within any channel space that Wave Matrix Mechanics is applied to. A collection of tiles is aperiodic if the collection tiles the plane, but never in a periodic fashion. In Fig. 15, is depicted three waves which comprise a fundamental Wave Matrix. Geometric tiling can be used to fill the spaces between the

The idea of time in this particular case takes on some interesting expressions. Referring to Fig. 2 and Fig. 4, the Holophasec 3D Magnetic Moment (H3DMM) 55 that is expressed in all three versions of the Wave Matrix 120, 120a and 120b is derived from the simultaneous generation and propagation of nine periodic wave and or half waves 104a, 104b, 104c, 104d, 104e, 104f, 104g, 104h, and 104i. Fig. 2 illustrates three of the nine waves 104a, 104b, and 104c. Referring to Fig. 4., Wave Matrix 120b depicts all nine waves 104a through 104i and Wave Matrix 120a expresses the symbolic meaning and weight of each Wave Matrix in terms of geometric symbolic constructs (GSC) 54f fractal-vector and or polygon-vector structures 145 by viewing the channel in terms of spatial depth and magnetic moment depth of energetic field with special relationship to thinking in terms of forward and backward in time.

The physical distance between vertice-vector point (VP) 87 and (VP) 87k also covers the trajectory of the Wave Matrix 120, 120a, and 120b as it travels through channel space and time. In this case the vertice (VP) 87 and (VP) 87k also represent emitter/exciter 51a and 51b respectively. The selected Wave Matrix 120, 120a, 120b and 120c in the first instance is generated and propagated from emitter/exciter 51a, which is a component of any type of radio transceiver, optical transceiver, and metallic power grid symbolic data transceiver. In this case the emitter/exciter component 51a is functioning as an emitter and emitter/exciter component 51b is acting as an exciter. Therefore for purposes here the direction of Wave Matrix propagation 72 is right to left frame of Fig. 2 presented here. One of the key components of recognising that between the vertice point (VP) 87 and (VP) 87k is that there exists channel depth of field. All communication channels possess channel depth of field. This channel depth of field is the third spatial dimension of Wave Matrix Mechanics. In terms of optics 'depth of field' the distance in front of and behind the subject in which detail remains in acceptable focus. In terms of Wave Matrix Mechanics the distance between an emitter and exciter point that remains in acceptable resolution range of each other in that each propagated Wave Matrix remains sharply definable and dynamically adaptable to the hostile spectral environment that exists between exciter/emitter 51a and 51b. The invention introduces the first three dimensional feedback protocol, process and procedure that read three dimensional interrelationship of continuous discrete state (CDS) as energetic feedback and from each generated and propagated Holophasec 3D Magnetic Moment 55 that is comprised of a selected Wave Matrix 120a, 120b and 120c respectively.

Referring to Fig. 3, depicted here is the Holophasec 3D Symbolic Engine (H3DSE) 90a. This simple rendering discloses the fundamental protocols, processes and procedures of Wave Matrix generation and propagation by a Holophasec 3D emitter/exciter that propagates a plurality of Wave Matrix aggregations that are augmented by an amplified power transmission of measured quantas of electromagnetic energy through any selected radio, optical and metallic channel space to another targeted Holophasec 3D emitter/exciter that resides within the topological layers of any selected communications networks. Core the structure of the engine is the Holophasec 3D Stereoscopic Manifold 93.

In mathematics a manifold is a topological space. Mathematical manifolds are locally path connected, and relate to simultaneous physical distribution of massless instruction algorithm instruction symbols and Wave Matrix information to the inventions Holophasec 3D Emitter/Exciter configurations. Truly a topological manifold can propagate 3D spatial electromagnetic information such as the inventions Holophasec 3D Modulated Magnetic Momoment. In topology and other related branches of mathematics, a topological space is said to be connected if it cannot be divided into two disjoint nonempty open sets whose union is the entire space. A physical manifold is any joined multipath array that has a common unimpeded communication space. A manifold is stereoscopic-Holophasec 93 if it is structured to provide two or more simultaneously propagational paths to one or more designated points in one time space domain as shown here. This topological array applies to how transistors and mathematical filters are arrayed in order convey 3D electromagnetic information through any printed circuit board (PCB) scalar array that is arrayed geometrically to provide three spatial dimensions of Holophasec 3D harmonic pathways that are configured to carry Holophasec 3D Magnetic Moments that are spatially tuned to carry regenerated continuous discrete state (CDS) intelligent signals to the inventions qualitative logic transistors and other compatible components on a 3D scalar array. The invention provides arrays of the three oscillators within the substrate layers of PNP and or NPN transistor arrays in order to generate and propagate n-dimensional possibilities of simultaneous 3D Wave Matrix generation with the respect to the specialised 3D emitter/exciter 51 provided by the invention. In the years following its creation, the transistor gradually replaced the bulky, fragile vacuum tubes that had been used to amplify and switch signals. The transistor became the building block for all modem electronics and the foundation for microchip and computer technology. The basic process of the transistor is that it controls the effect of current on a particular circuit as the transistor is made to alter its state from a starting condition of conductivity, switched 'on', full current flow, to a final condition of insulation, switched 'off, no electrical current flow. The operational cycle of a basic transistor begins with current flowing through the transistor from the emitter point E to the collector point C. When a negative voltage is applied to the base point B, electrons in the base region are pushed 'like' charges repel, in this case both negative back creating insulation boundaries. The current flow from point E to point C stops. The transistor's state has been changed from a conductor to an insulator.

A topological manifold that sets specific mathematical and physical bounds that are applied here to cause orderly propagation (1) direct instructional and (2) content information such as a plurality of Wave Matrix superposed topologies to designated points on printed circuit board scalar arrays that are expressed here in simple geometric topologies. In fact the invention provides apparatus that In this rendering the Holophasec 3D Emitter/exciter 51 is configured as a parabolic topological target array 53 that contains combined convex and concave 3D target face surfaces 53. By combining convex and concave surfaces on one parabolic plane infinite variations of Holophasec 3D Magnetic Moments as defined by specific Wave Matrix by infinite variables that are available with respect to the generation and propagation of simultaneous 3D wave combinations.

Disclosed herein are means, methods and mediums of symbol dictionary creation, symbol storage, and retrieval that are based upon the creation of novel geometric constellations that range from cube space constellation topologies 129e, 129f, 129h, 129i, 129j, 128k, 128L, and 129m accordingly to any dimensional geometric constellations defined as a plurality of mathematical formulas known in the art and formulas that are novel with reference to the operational protocols of the invention. There is provided a burst generation chamber 151 that is designed to generate and propagate matrixes of full waves, half waves and or wavelets that derive n-dimensional 3D geometric constellation variations. The burst generation chamber 151 is directly interconnected to the inventions spherical Holophasec 3D antenna 124 as shown in Fig. 6. Referring to Fig. 3, omitted from the specification is a power amplifier array that typically interfaces between the burst generation chamber such as a pre-amplification wave-guide and the antenna array of any radio transmission device such as the case with low noise amplifiers (LNA) and low noise block amplifiers (LNB) for ku, ka and C-band satellite television systems. These can be organized into hierarchical sequences for which the ratio of the sizes of successive copies approaches a limiting value based upon the instant condition of any channel space and the overall resolution limits of any existing channel space and supportive network topology thereof. Qualitative Mechanical Logic (QML) and the protocols, processes and procedures of the fractal-vector and or polygon-vector geometric methods of producing wave matrix combinations is related one way as to how fractal geometric equations can produce Mandelbrot sets that make smaller copies of itself. The inventions, protocols, processes and procedures can produce smaller versions of wave matrixes that can be propagated in channel space that possess the same symbolic value or weight as the larger versions while increased the symbol rate with respect to transmission rate without effecting symbol integrity in qualitative channel environments.

The invention makes use of what we term a 'Matrix Mapper,' here on referred to as a Mapper to extract information from the geometry of each Wave Matrix. Once the GSC has been constructed and projected along the user's 'angle of view' the result is a 2D geometric structure that expresses n-dimensional symbolic variations. This is the structure on which the Mapper operates. The Mapper is given a starting point, uses a simple set of instructions to negotiate a path that defines the desired 3D discrete logic from the generated geometric structure. The Mappers are structured to follow certain geometric forms that may or may not exist in the geometric structure from the start point given to them. For instance if a Matrix Mapper designed to define a vector along a specific route from a point did not return to the initial point then the pentagon was not found and the Mapper extracted no information from the GSC, because there was no match. It is important to note that these functions are very computationally efficient lending themselves to mobile cellular applications while being trivial for other telecommunications facilities.

Matrix Mappers introduce topological control of information flow allowing the amount of information each user receives to be dynamically changed without the exchange of control information. This is achieved by controlling the topology of the GSC as perceived along the user's "angle of view" to control how many Mappers will return information to the user. Mappers can be further controlled by channel GSC topology if the initial point is defined as an intercept between two vectors within a GSC then it will only operate in regions of GSC topologies that contain an intercept between the specific vectors usually designated as XYZ1.

Mappers form the basis of a dynamic topological dictionary constellation. Since the Mappers are defined such that they will only be valid if a certain topology is found originating from a given point, they are the dynamic functionary of the holophasec 3D sample dictionary that interprets the geometric form. The matrix Mapper not only extracts but also orders the information that the user derives from the channel, an aspect that can be exploited for multiple users accessing the same GSC and extracting different information from it. Therefore, since the Mappers that are used can be dynamically defined either by the channel or dynamically evolved in known manner, by controlling the topology of the channel different Mappers can be made to be invalid while others are made valid. This allows the user to have a number of Mappers operating that attempt to extract information giving the channel more freedom in the structures that can convey information to the user under a wide range of channel conditions.

The structure and function of a Matrix Mapper has relation to both Cellular Automata (CA) and Genetic Algorithms (GA), yet the use of fractal geometry and polynomial equations simplifies the means and methods of the invention. Since the simple instruction set can be considered the "genome" of the Matrix Mapper, GA approaches can be used to evolve complimentary sets of Mappers for specific topologies. The genome of a Mapper over the course of a message can also be permuted, or selectively have 'genes' or instructions activated or passivated by a pseudorandom code, CA or similar processes.

Referring to Fig. 5, here is depicted the inventions Wave Matrix Holophasec 3D Transform structures that are derived from simultaneous wave fractal-vector, polygon-vector relationships that comprise the GSC. These relationships are qualified and quantified by the dynamic algorithmic rendering performed by Wave Matrix Holophasec 3D Transform Holomapping and its dynamic dictionary builder the Matrix Mapper. The Matrix Mapper 158a, 158b and 158c represent a unique component of the Holophasec Transform mapping process that entails mapping the mathematical coordinates of each polygon line and polygon plane that is produced by the holomapping process that defines the symbolic value and geometric coordinate value of each selected Wave Matrix. For example matrix Mapper 158a represent the dynamic mechanical component that is essential to pTp holomapping 92, measure and define polygon structures that create geometric symbolic constructs (GSC) 54b. Looking at polygon structure 79 we see that each polygon line (PL) 75a, 75b, 75c, 75d, 75e, 75f, and 75g connects each vertice point (VP) 87a, 87b, 87c, 87d, 87e, 87f, 87g, 87h, and 87i. The interconnection of polygon lines (PL) to each vertice point (VP) creates polygon planes (PP) 76a, 76b, 76c, 76d, 76e, and 76f. In this particular case each vertice point (VP) represents a periodic wave peak and the centre of the polygon structure 161.

Referring to Fig. 3, illustrated here as an essential part of of Holophasec 3D Symbolic Engine (H3DSE) 90a is the wave detector array, the inventions three-dimensional wave detection system. Edouard Branly in 1890 was the first experimenter to note that metallic powders, iron filings for example, exhibited the property of coherence or reluctant projection. The visible light range is the frequency we see with our eyes we see light in all three spatial dimensions. The highest frequencies in nature are detected as particles and radio frequencies are detected as waves. Radio waves also reflect and project in all three dimensions. A typical detector is used to pick up the periodic wave. A wave of visible light, or radio is the photon. A photon is composed of both energy and mass. It has a dual relationship of a wave and a particle. Once a photon hits a detector, it releases energy. This energy is converted to a voltage and thus give a level of intensity or amplitude. Two equations are used in the relationship between energy, frequency and wavelength. E= ***hv*** where ***h*** is Planck's constant and ***v*= c/**λ, where **c** is speed of light and λ is the wavelength. Digital circuitry of any type of radio device utilises Nyquist related sampling and quantising methods to consistently capture a quanta of energy and reduce it to binary logical. These processes are well known in the art and therefore will not covered in detail for the purposes of this disclosure.

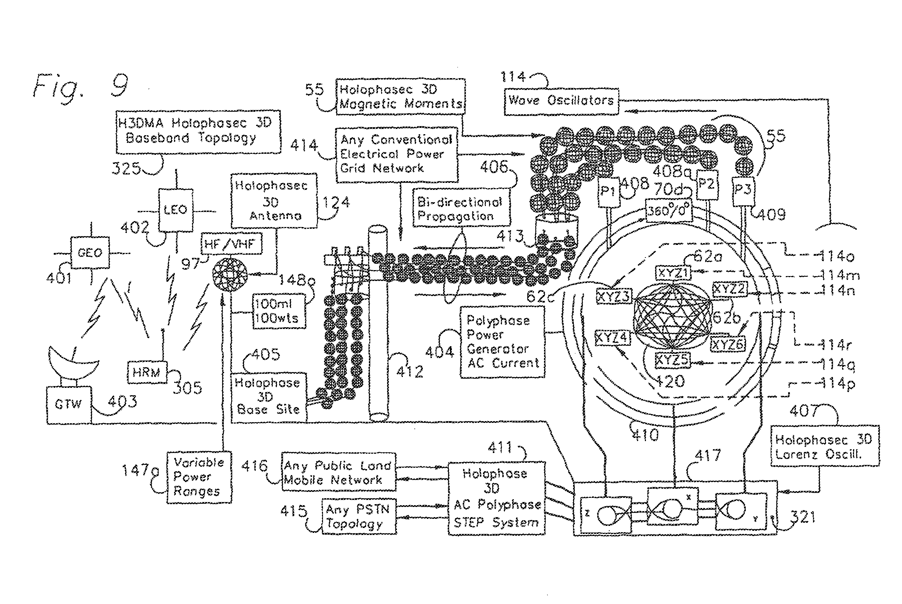

Referring to Fig. 9., depicted here is a Holophasec 3D Polyphase Communications network. Current solutions involving propagated digital data do not work over long distances through the pluralities of electromagnetic shunts have always created problems with transporting data. A shunt typically diverts an electrical current to different direction and or reduces the voltage supplied to a particular destination such as a commercial, or residential building that is connected via a step down transformer on an electrical grid network. This process utilised in conventional step up and step down transformers that are used throughout the planet over electrical power grid network topologies simply because the way conventional digital data is coded, rigidly controlled within the paradigms of deterministic logic and one dimensional points of view. Today there are a plurality of broadband digital data solutions of like users within buildings and the like over electrical power grid networks. These conventional solutions bypass the step up and step down transformers as illustrated here 413. A typical electrical power grid network is also comprised of the power plant, a plurality of transmission substations, high voltage transmission lines, and power substations. Power substations include switch, breakers and transformer arrays. There is the final step down transformer that is connected directly to commercial and residential buildings that provide relatively safe voltages to users throughout the world. The invention clearly provides means and methods that operate seamlessly within the electromagnetic transfer of energy from one voltage state to the next. The shunting process has typically introduced unacceptable noise to binary logic information that derives messaging when these conventional symbology formats have been applied.

Whether positive or negative, every charged particle carries a magnetic field. Charge and field are inseparable aspects of the same force, the electromagnetic force. The two quantities interact constantly. Any massless or massive concentration of electromagnetic energy is a magnet, i.e. every electron or proton is a magnet, with its own north and South Pole. All points of material and energetic concentration can be simply understood as an electromagnetic emphasis, or focal point of perception that is phase-space-place (PSP) that is never a singularity. Every point of concentration and conjugational focus is by definition a multiplicity. No field of reference within the state bounds of any point of view is ever singular.

A power plant typically contains one or a plurality of power generators 404 that generate three phases of electrical energy along three conductors P1 408, P2 408a and P3 409. A generator contains a large rotor and it turns within a housing 410 that contains multiple magnets and other components that contribute to the production of electrical energy. The generator rotor is directly or indirectly connected through some mechanical transfer through a series of gear and shafts. The rotor system is connected to a turbine system that is typically driven by the movement of water or steam across turbine impeller blades. The kinetic movement of natural water that occurs in rivers typically powers the mechanical functions of the turbines. Fossil fuel and nuclear fission is also used. All modem power plants produce power that is based upon alternating current AC. As disclosed these generators produce three different phases of power simultaneously, and the three phases are offset 120 degrees from each other.

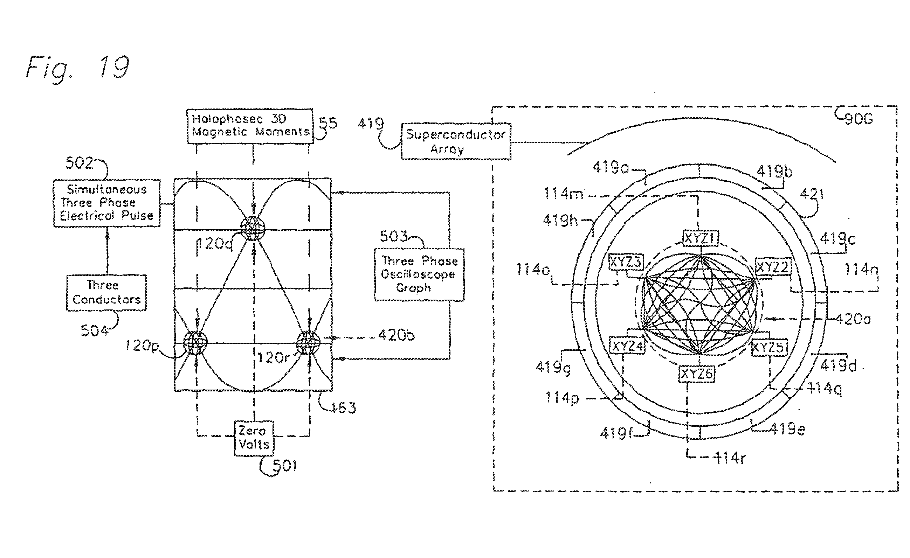

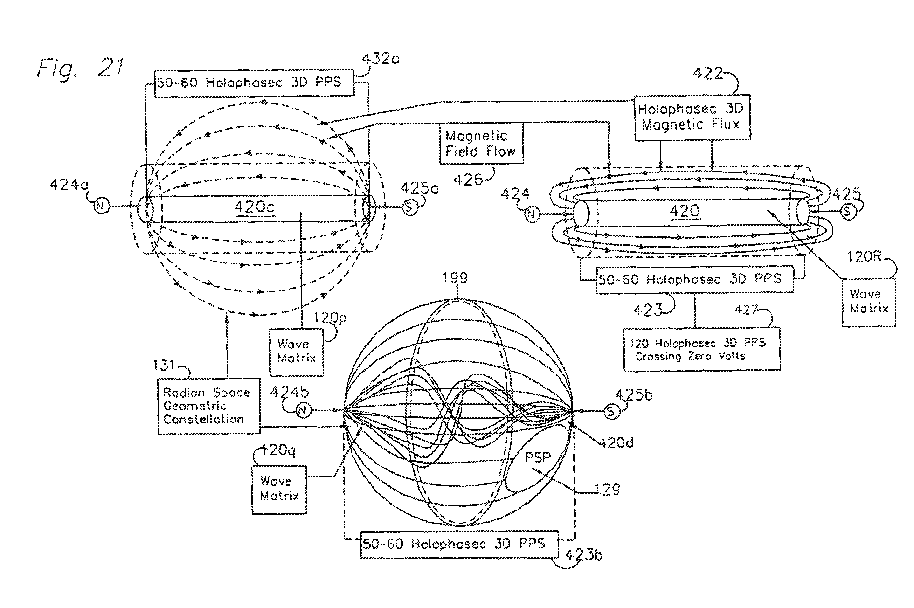

The three phase conductors plus a neutral or ground conductor common to all three. If you were to look at the three phases on a graph, they would look like this relative to ground. The foundation of electrical grid is simply three single phases synchronized and offset by 120° degrees as shown in Fig. 4 59a, 59b and 59c. The relationship of any channel rendered here depict cross or lateral phase relationships of Wave Matrix aggregations as expressed by multiple GSC 54f symbolically and geometrically designated here by each relative offset lateral phase angle 83a, 83b, 83c and 83d of each vector 42a, 42b, 42c and 42d. Each GSC vector also geometrically defines one three Wave Matrix. Each vertice point that defines one of the four vectors depicted is group in triads: 62a, 62b, 62c, and 63a, 63b, 63c, and 64a, 64b, 64c and 65a, 65b, 64c. These designated vertice point also geometrically indicates one wave peak or trough that are linked by a vector line. Three linked vector lines define each vector plane. Each wave peak or trough also designates a geometric vertice point. Each vertice point provides a unique XYZ stereoscopic perspective that defines the n- dimensional symbolic potential of one or a plurality of Wave Matrix aggregations looking from one end of the channel to the other, forward and back in time that also occupies the space between any emitter or exciter combination. Shown here is a channel structure that could be a radio channel, an optical channel or a channel defined within the electron and atomic structure of a metallic conductor 420, 420a, 420b and 429c as shown in Fig. 19, and Fig. 21 respectively. Referring to Fig. 4. The aggregate assemblage of the time and space-distance measured mathematically between each wave angle 84a, 84b, 84c, and 84d in this case also defines each vector. In terms of the relative wave position each peak and or trough designate the vector by offset lateral phase angle. The invention provides many methods of defining symbolic value by providing a new digital symbology that extend beyond the restrictions of merely counting wave peaks and troughs which is the cornerstone of binary logic. By simply adding one more wave and measuring the unique signature characteristics of a three wave matrix, the digital channel is completely expanded and each defined magnetic moment possess infinite symbolic state potential.

Referring to Fig. 21, in terms of adding symbolic information over a metallic conductor 420 of a power grid network the invention provides another means and method of Wave Matrix virtual integration. In 1 -phase and 2-phase power, there are 120 moments per second when a sine wave is crossing zero volts. The invention also utilises this zero point interval to insert a plurality of Wave Matrix aggregations using Holophasec 3D Modulated Magnetic Moments (H3DMMM). This method provides 120 Holophasec 3D Modulated Magnetic Moment as a 120 pulse per second when crossing zero volts 427. Each pulse is comprised of a plurality of Wave Matrix aggregations. In terms of three-phase power, at any given moment one of the three phases is nearing a peak. The invention integrates Holophasec 3D Modulated Magnetic Moments 55 at the point in the oscillating time domain when the sine wave is crossing zero volts 501 as shown in Fig. 19. Even a sine wave at zero volts possesses and propagates magnetic attraction. Conventional magnetic fields are produced by electric currents, which can be macroscopic currents in wires, or microscopic currents associated with electrons in atomic orbits. The magnetic field B is defined in terms of force on moving charge in the Lorentz force law. The interaction of magnetic field with charge leads to many practical applications. Magnetic field sources are essentially dipolar in nature, having a north and south magnetic pole. In terms of conventional thinking magnetic flux is the product of the average magnetic field times the perpendicular area that it penetrates. It is a quantity of convenience in the statement of Faraday's Law and in the discussion of conventional apparatus such as transformers and solenoids. In the case of an electrical power generator the magnetic field penetrates a rotating coil, the area used in defining the flux is the projection of the coil area onto the plane perpendicular to the magnetic field and these fields can carry Holophasec 3D Modulated Magnetic Moments as comprised of multiple Wave Matrix aggregations. This process extends to any metallic conductor that electromagnetic energy passes through. The conventional understanding of magnetic flux views these fields as one and in some cases two-dimensional electromagnetic propagated fields. Another fundamental expression of the Qualitative Mechanical Function (QMF) inherent with Wave Matrix Mechanics is that magnetic flux is in three dimensional electromagnetic Holophasec 3D field that swirls around any material or device that generates, transmits and is powered by electromagnetic energy. One of the basic proponents of QML is that three dimensional wave matrix holograms of n-dimensional geometric symbolic construct (GSC) information can be generated, stabilized and made functional as means of carrying massive amounts of three dimensional geometric symbol construct (GSC), information from one point to another along a power line transmission (PLT) grid. In fact this process could be accomplished without disrupting any original power grid network power signal, infrastructure element, and any device connected to the grid. The invention utilises both the zero volt interval that exists between the 50 and 60hz pulses and the magnetic flux that is inherently Holophasec 3D with respect to its utter potential that is currently unknown and unused in the art.

The invention eliminates this problem by introducing the means and method of viewing the magnetic moment from as many points of view as possible simultaneously as clusters of Wave Matrix aggregations travel in variable cycles within the electromagnetic flux that propagates around a metallic conductor between the 50 to 60hz electromagnetic pulses that comprise an interval, a time domain that allows for the interleaving of clusters of Wave Matrix aggregations that deliver high level concentrations of symbolic information. This unique method introduces a revolution is delivering symbolic information over power lines without disrupting the flow of electrons over metallic conductors that comprise power grid network topologies. The 50 to 60hz oscillation cycle is slow when compared to what we typically view as what is acceptable in today's technological paradigm is acceptable as conventional broadband data services such as cable broadband and asynchronous digital subscriber line (ADSL). These services deliver relatively high-speed data services.

Electrons cluster about a proton-packed nucleus until negative and positive charges exactly match, as many electrons as protons. In fact, electrons are constrained to fill discrete energy "slots" when attracted to the locality of a nucleus. The first, innermost set of slots can accommodate up to two electrons, the next eight, the next eighteen and so on. But starting from closest to the nucleus each set of slots, called a *shell,* Photons, protons, and electrons are charged particles. Whether positive or negative, every charged particle carries a magnetic field. Charge and field are inseparable aspects of the same force, the *electromagnetic* force. The two quantities interact constantly. Every electron or proton is a magnet, with its own north and south pole. If, however, some electrons are forced to move all in the same direction along a conductor, like a copper wire, they build up a magnetic field around the wire. Conversely, if a magnetic field is passed across the wire, it will cause electrons to move - a phenomenon termed *induction.* The invention utilises the magnetic field to carry clusters of Wave Matrix aggregations that possess simultaneous values of variable frequency, variable amplitude and variable 3D phase arrays that do not interrupt the conventional flow of electrical power conveyance across a vast electrical power grid. The inventions Wave Matrix mechanical aggregations surfs along the peaks and valleys generated by the electromagnetic intervals of alternating current from the originating power generation point. Like electrons being attracted to discrete energy slots, clusters of Wave Matrix aggregations are attracted to the intervals simply because the Wave Matrix clusters are pulsed to fill the intervals that exists between the 50hz- 60z pulses. This means and method avoids the process of introducing noise and interference when viewing the channel from only one perspective described here as Holophasec 3D Sample space, or more fundamentally phase-space-place (PSP). One method is to use completely novel Holophasec 3D conjugate detection and analysis that uses n-dimensional wave-phase-array in terms of any expression of lateral orientation or any expression of linear orientation as needed and so applied in order to derive infinite variability in terms of symbolic expression. This flexibility is also applied towards creating high speed symbolic information conveyance over long distances using all conductors sizes, high voltage, medium voltage and the usable voltage levels that are directly accessed by the everyday consumer. The inventions Holophasec 3D

The cryptographic potential Wave Matrix Mechanics and Holophasec Modulated Magnetic Moment are unlimited. In fact a new ***cryptokey*** could be issued to each user for every Holophasec 3D message ever propagated and the key would never be repeated. In fact the invention provides the hardest encryption known in the art today, for any three-dimensional 3D symbolic variable can be applied to any message that contains any language construct to any channel and to the information being coded and propagated. In fact the invention enables such levels of symbolic variability that a specific Holophasec 3D Encryption need never be repeated if any form of Holophasec 3D Encryption Keys are redefined within the time domain of every modulated magnetic moment that is generated and propagated. The intrinsic infinite configuration potential of three spatial dimensional logic provides the most diverse encryption variables and hardest encryption codes ever devised because they are based upon 3D Logic that is spatially defined within the structures of the Holophasec 3D Channel and the 3D codes inherent to the mechanics of the inventions Wave Matrix. Current proposals for Quantum Cryptography claim that is theoretically impossible to break the codes based upon quantum mechanics. The invention provides such a revolution in quantum cryptography within the geometric structures of its means and methods that it is virtually impossible to break the Holophase 3D Cryptographic Codes (H3DCC).

One of the primary objects of the invention to provide means, methods and apparatus that enables the accurate recording, and re-transmission of sound and visual information from its original three dimensional source that utilize Holophasec 3D wave modeling protocols, processes and procedures. Additional objects and advantages will readily occur to those skilled in the art. The invention in its broader aspects is not limited to the specific details, methods, representative devices, and illustrative examples shown and described. Accordingly, departures may be made from such details without departing from the spirit or scope of the general inventive concept as defined by the appended claims and their equivalents. The examples provided herein are illustrative only, and are in no way meant to limit the invention.

## Claims

1. A method comprising:
accessing a database to determine a message to send, the database including data describing a plurality of geometric symbol constructs, each geometric symbol construct having three spatial dimensions and multiple symbolic elements; and
sending the determined message by generating, via an array of transmitters, a nested matrix of simultaneously propagated electromagnetic waves having three or more superimposed electromagnetic waves representing one of the geometric symbolic constructs of the database.

2. A method comprising:
sampling, via a plurality of exciters, a nested matrix of simultaneously propagating electromagnetic waves, the wave matrix having three or more superimposed electromagnetic waves representing a three dimensional symbolic construct having multiple symbolic elements; and
accessing a database including data describing a plurality of geometric symbol constructs having three spatial dimensions, the accessing to determine, based on the sampled wave matrix, the three dimensional symbolic construct represented by the three or more superimposed electromagnetic waves.

3. An apparatus comprising:
a database to store data describing a plurality of geometric symbol constructs, each geometric symbol construct having three spatial dimensions and multiple symbolic elements; and
an array of emitters coupled to the database to send a message by generating a nested matrix of simultaneously propagated electromagnetic waves having three or more superimposed electromagnetic waves representing a three dimensional symbolic construct described by the database.

4. The apparatus of claim 3, further comprising:
an array of exciters coupled to the database to receive another nested matrix of simultaneously propagated electromagnetic waves having three or more superimposed electromagnetic waves representing another three dimensional symbolic construct.

5. A system comprising:
a first database to store data describing a plurality of geometric symbol constructs, each geometric symbol construct having three spatial dimensions and multiple symbolic elements;
a first array of phase-space-position portals that are coupled to the database to transmit a message based on data in the first database, including generating a matrix of simultaneously propagated electromagnetic waves including three or more superimposed electromagnetic waves representing a three dimensional symbolic construct described by data of the database; and
a second array of phase-space-position portals to sample the generated matrix of simultaneously propagated electromagnetic waves.

6. The system of claim 5, the second array of phase-space-position portals further to transmit to the first array of phase-space-position portals a reflection of the transmitted wave matrix.

7. A method comprising:
obtaining a primary wave matrix;
generating a holophasec three-dimensional message based on the primary wave matrix;
propagating the holophasec three-dimensional message as a plurality of superimposed periodic waves.

8. The method of claim 7, wherein the primary wave matrix is obtained from a data structure.

9. The method of claim 8, wherein the data structure comprises a dictionary.

10. The method of claim 8, wherein the data structure comprises a look up table.

11. A holophasec three-dimensional engine, comprising:
a plurality of phase-space-position portals that each propagate respective phase-space-position samples;
a three-dimensional mapper to geometrically map a three-dimensional symbol value to each phase-space-position sample;
a holophasec three-dimensional manifold to guide geometric mapping of three-dimensional symbol values to corresponding samples from the portals;

12. The holophasec three-dimensional engine of claim 11, further comprising a data store from which to obtain the phase-space-position samples to propagate.
